(19) Europäisches Patentamt
European Patent Office
Office européen des brevets

(11) EP 3 633 002 A2

(12) **EUROPÄISCHE PATENTANMELDUNG**

(43) Veröffentlichungstag:
**08.04.2020 Patentblatt 2020/15**

(51) Int Cl.:
*C09J 5/00* (2006.01) *B65H 35/00* (2006.01)
*B65C 9/18* (2006.01)

(21) Anmeldenummer: **19196705.8**

(22) Anmeldetag: **11.09.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **11.09.2018 DE 102018215412**
**25.10.2018 DE 102018218283**

(71) Anmelder: **tesa SE**
**22848 Norderstedt (DE)**

(72) Erfinder:
- **SELLIN, Jannik**
  **22767 Hamburg (DE)**
- **BARKLEY, Arne**
  **25551 Winseldorf (DE)**
- **Collazo, Manuel**
  **Pontevedra 36002 (ES)**
- **BRANDT, Hans-Peter**
  **22869 Schenefeld (DE)**

(54) **VERFAHREN ZUM AUFBRINGEN VON STANZTEILEN AUF OBERFLÄCHEN SOWIE TESTVERFAHREN DAFÜR**

(57) Die vorliegende Erfindung betrifft ein Verfahren zum Übertragen von Stanzteilen von einer Linerschicht auf eine Oberfläche, wobei die Stanzteile von der Linerschicht mittels eines Applikators auf die Oberfläche übertragen werden, dadurch gekennzeichnet, dass das Verhältnis der Abzugskraft des Stanzteils von der Linerschicht in z-Richtung zur Abzugskraft des Stanzteils von der Oberfläche in z-Richtung höchstens 0,18 beträgt. Das Verfahren ermöglicht ein besonders zuverlässiges und festes Übertragen von Stanzteilen von einem Stanzteilband auf eine zu beklebende Oberfläche. Dadurch lässt sich die Fehlerhäufigkeit bei der Verklebung von Kunststoffteilen relevant reduzieren.

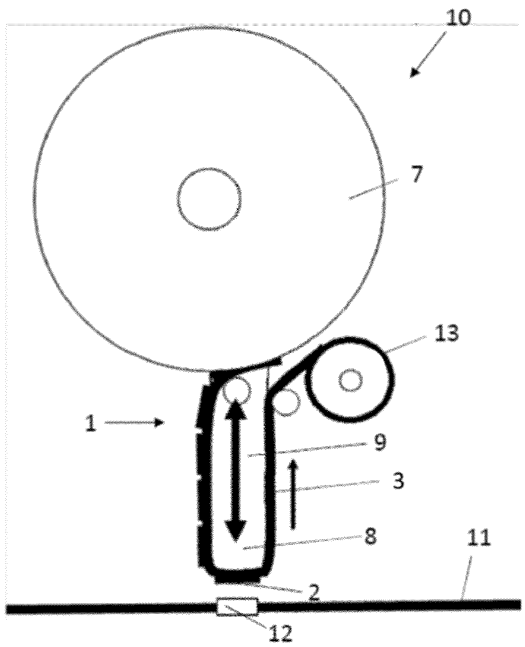


Fig. 1

EP 3 633 002 A2

## Beschreibung

Die vorliegende Erfindung betrifft ein Verfahren zum Übertragen von Stanzteilen, d.h. Stanzlingen, von einer Linerschicht auf eine Oberfläche, wobei die Stanzteile von der Linerschicht mittels eines Applikators auf die Oberfläche übertragen werden, dadurch gekennzeichnet, dass das Verhältnis der Abzugskraft des Stanzteils von der Linerschicht in z-Richtung zur Abzugskraft des Stanzteils von der Oberfläche in z-Richtung höchstens 0,18 beträgt. Die Erfindung betrifft ferner ein Testverfahren zur Auswahl eines Klebebandes als Stanzteilband, wobei das Stanzteilband aus auf einer Linerschicht aufgebrachten Stanzteilen gebildet ist, die mindestens eine Klebmasseschicht umfassen, für das Übertragen der Stanzteile von der Linerschicht auf eine Oberfläche eines Substrats mittels eines Applikators.

Klebstoffe und Klebebänder werden im Allgemeinen verwendet, um zwei Substrate zusammenzufügen, so dass eine dauerhafte oder permanente Verbindung entsteht. Trotz einer Vielzahl an Klebstoffen und Klebebändern ist aufgrund von neuartigen Substraten sowie steigenden Anforderungen bei der Endanwendung die Notwendigkeit gegeben, neue Haftklebemassen (d.h. Selbstklebemassen), Formulierungen und Klebebanddesigns zu entwickeln. So hat sich herausgestellt, dass gerade neue Bauteile im Innenbereich von Automobilen, auf denen Klebebänder temporär oder permanent haften sollen, kritische Oberflächen aufweisen und eine Herausforderung für die Verklebung darstellen. Aufgrund der niedrigen Oberflächenenergie dieser Bauteile werden speziell für diese Anwendungen entwickelte Klebebänder benötigt.

Bisher kamen bei der Befestigung von Kunststoffteilen, die aus niederenergetischen Materialien wie z.B. Polypropylen bestehen, vor allem Schweißverfahren wie Ultraschall-, Vibrations- oder Laserschweißen, zum Einsatz, auch wurden Clips eingesetzt. Diese Verfahren sind allerdings sehr unflexibel und investitionsintensiv, sorgen aber für hohe Sofortfestigkeiten, so dass sie nach wie vor Marktstandard bei den Fügetechnologien von Kunststoffteilen sind.

Weiterhin steigt die Verwendung von Klebebändern aufgrund des fortlaufenden Trends im Transportsektor und insbesondere in der Automobilindustrie, das Gewicht zum Beispiel eines Autos weiter zu verringern und somit den Kraftstoffverbrauch zu reduzieren. Dies führt dazu, dass Klebebänder für Anwendungen verwendet werden, für die bisherige Klebebandprodukte nicht vorhergesehen und entwickelt waren, und zusätzlich zu der mechanischen Belastung und den für Klebeanwendungen kritischen Haftuntergründen kommen steigende Anforderungen gerade für permanente Verklebungen hinsichtlich der UV- und Bewitterungsstabilität hinzu.

Folglich existiert die Anforderung an ein Klebebandprodukt, eine verbesserte Haftung auf niederenergetischen Oberflächen wie Automobilfarben und -lacken aufzuweisen und dabei auch unter extremen klimatischen Bedingungen ein hervorragendes Leistungsprofil zu bewahren. Kälteschlagfestigkeit und eine ausreichende Kohäsion auch bei hohen Temperaturen werden von der Automobilindustrie insbesondere bei permanenten Außenverklebungen (Embleme, Stoßdämpfer) gefordert.

Zusätzlich muss das Klebeband auch den Herstellungsprozessen gerecht werden. Aufgrund fortschreitender Automatisierung von Produktionsprozessen sowie des Wunsches nach ökonomischeren Fertigungsweisen muss das Klebeband, sobald es an der richtigen Stelle platziert ist, eine genügend hohe Adhäsion aufweisen und teilweise auch hohe Scherkräfte aushalten. Hierzu ist es von Vorteil, wenn die Klebebänder einen hohen Tack zeigen und die Klebemassen auf diversen Untergründen schnell auffließen, so dass in kürzester Zeit eine gute Benetzung und somit hohe Klebkräfte erreicht werden.

In der Automobilindustrie besteht somit ein großer Bedarf an doppelseitigen Klebebandprodukten, die zum Zusammenfügen von niedrigenergetischen Oberflächen geeignet sind. Auch einseitige Klebebandprodukte, die eine gute Haftung auf niedrigenergetischen Oberflächen aufweisen, sind gefragt, z.B. für das Verschließen von Löchern in Karosserieteilen.

Bei der Herstellung von Kraftfahrzeugen tritt häufig das Problem auf, dass in Karosserieteilen eingebrachte Öffnungen nach Bearbeitungsvorgängen wieder verklebt werden müssen. Beispielsweise können Karosserieteile mit Flüssigkeit oberflächenbehandelt werden. Die zur Oberflächenbehandlung erforderliche Flüssigkeit läuft über in die Karosserieteile vorher eingebrachte Öffnungen von selbst ab. Nachträglich werden die Öffnungen wieder verschlossen. Das Verschließen der Öffnungen erfolgt häufig per Hand, indem Stanzteile von einem Stanzteilband oder einem Stanzteilblatt abgenommen und per Hand auf die Öffnungen aufgeklebt werden. Die Stanzteile weisen eine Trägerschicht auf und eine auf der einen Seite der Trägerschicht aufgebrachte Klebmasseschicht. Die Klebmasseschicht ist in der Regel vollflächig auf die Trägerschicht aufgebracht.

Es ist auch bekannt, Klebeband automatisiert zu applizieren. Ein Verfahren dafür ist zum Beispiel in der DE 100 35 236 A1 beschrieben. Hierbei wird während des Applizierverfahrens Klebeband zunächst von einer Rolle abgewickelt und mit einer Applizierwalze auf eine zu beklebende Oberfläche gedrückt. Mittels eines weiteren Werkzeuges wird der aufgeklebte Klebebandabschnitt vom restlichen Klebeband abgetrennt. Daraufhin wird die Applizierwalze wieder eingefahren und die Vorrichtung zur nächsten Klebestelle verfahren.

Ein weiteres Verfahren zum Applizieren von doppelseitigen Klebeband in der Automobilindustrie, das insbesondere zum Zusammenfügen zweier gekrümmter Teile geeignet ist, ist in der US 2005/0016671 A1 beschrieben.

Für die Verwendung von Klebebändern ist die Wirtschaftlichkeit ein relevanter Faktor. Hierfür ist das Applikationsverfahren von entscheidender Bedeutung. Gerade auch, um Schweißpunkte zu ersetzen, eignet sich insbesondere die Verwendung von Stanzteilen, auch als Stanzlinge bezeichnet. Hierbei handelt es sich um vorkonfektionierte Klebebandabschnitte. Je nach Anforderung und Anwendung können die Anzahl bzw. die Größe dieser Stanzteile angepasst werden. Im Hinblick auf die Wirtschaftlichkeit und um einen sicheren Fügeprozess zu gewährleisten, eignen sich insbesondere automatisierter Roboterlösungen, bei denen ein Roboter mit einem Applikationskopf zum Einsatz kommt.

In diesem Zusammenhang sind in jüngerer Zeit Applikatoren und Applikationsverfahren entwickelt worden, die auch ein automatisiertes Applizieren von einseitig klebenden Stanzteilen, insbesondere im Bereich der Automobilindustrie ermöglichen. Solche Applikatoren und Verfahren sind in den noch unveröffentlichten DE 10 2018 200 439 und DE 10 2018 210 746 beschrieben.

Bei diesen Verfahren wird ein Stanzteilband mit entlang eines Haltegurtes aufgebrachten Stanzteilen über einen Stempelkopf eines hin und her verfahrbaren Stempels bewegt, wobei die Stanzteile eine Träger- und eine Klebmasseschicht aufweisen und die Trägerschicht zwischen dem Haltegurt und der Klebmasseschicht angeordnet wird. Dabei wird das Stanzteilband gestoppt, wenn ein Stanzteil über dem Stempelkopf positioniert ist, und der Stempel wird dann in einer Hin-Bewegung mittels eines Roboters auf die Oberfläche bewegt und das Stanzteil auf die Oberfläche geklebt. Während der Hin-Bewegung wird das Stanzteilband etwas nachgeführt, damit das Stanzteil nicht vom Stempelkopf rutscht. Ebenso wird das Stanzteilband während der Her-Bewegung ebenfalls durch Nachführen des Stanzteilbandes gespannt gehalten.

Grundsätzlich ist entscheidend, dass die Stanzteile präzise, schnell und sicher appliziert werden, und zwar auch bei einer Rund-um-die-Uhr-Verarbeitung. Die Präzision wird entscheidend durch die Programmierung und Ausführung von Roboter und Applikator beeinflusst. Die Schnelligkeit und das sichere Aufbringen der Stanzteile hängen neben Roboter und Applikator maßgeblich auch mit der Beschaffenheit des Klebebandes zusammen.

Eine sichere Übertragung soll innerhalb von wenigen Sekunden Andruckzeit und schon bei geringem Andruck sichergestellt sein. Dass bereits ein geringer Andruck ausreicht, ist deshalb von Bedeutung, da es sonst zu einer Verformung des Bauteils, auf dem das Stanzteil appliziert werden soll, kommen kann.

Aufgabe der Erfindung ist es daher, einen schnellen und sicheren, d.h. zumindest wirtschaftlichen, Applikationsprozess zur Verfügung zu stellen, der insbesondere im automatisierten Verfahren gewährleistet, dass Stanzteile zuverlässig und fest auf den zu beklebenden, insbesondere auch niederenergetischen, Untergrund übertragen werden und auf diesem haften, und zwar vorzugsweise auch bereits bei geringem und kurzem Andruck.

Gelöst wird diese Aufgabe durch ein Verfahren, wie es im Hauptanspruch beschrieben ist. Gegenstand der Unteransprüche sind vorteilhafte Fortbildungen des Erfindungsgegenstandes. Des Weiteren umfasst die Erfindung die Verwendung des Verfahrens sowie ein Prüfverfahren, d.h. Testverfahren, zur Eignung eines Klebebandes, und somit zur Auswahl eines Klebebandes, für das Verfahren.

Demgemäß betrifft die Erfindung ein Verfahren der eingangs genannten Art, wobei das Verhältnis von Abzugskraft des Stanzteils von der Linerschicht in z-Richtung zur Abzugskraft des Stanzteils von der Oberfläche (eines Substrats) in z-Richtung höchstens 0,18 beträgt.

Anders ausgedrückt:

$$Abzugskraftverhältnis\ z_Richtung = \frac{Abzugskraft\ z_Richtung\ vom\ Liner\ \left[\frac{N}{cm^2}\right]}{Abzugskraft\ z_Richtung\ vom\ Substrat\ \left[\frac{N}{cm^2}\right]}$$

Als "z-Richtung" ist dabei die Richtung senkrecht zur Flächenausdehnung des Stanzteils zu verstehen.

Dem Fachmann ist klar, dass die Abzugskraft des Stanzteils von der Linerschicht sich auf jene Seite des Stanzteils bezieht, über die das Stanzteil im erfindungsgemäßen Verfahren auf der Linerschicht angeordnet ist. Dem Fachmann ist ebenso klar, dass die Abzugskraft des Stanzteils von der Oberfläche eines Substrats sich auf jene Seite des Stanzteils bezieht, über die das Stanzteil im erfindungsgemäßen Verfahren auf der Oberfläche des Substrats angebracht wird.

Überraschenderweise hat sich im Rahmen der Erfindung herausgestellt, dass es für eine zuverlässige und feste Übertragung, auch als "Spendeerfolg" bezeichnet, nicht allein auf die Beschaffenheit der Oberfläche des zu beklebenden Substrats, die Beschaffenheit der Klebemasse oder die Beschaffenheit des Liners ankommt, sondern auf das angegebene Abzugskraftverhältnis. Die Abzugskraft des Stanzteils von der Oberfläche eines Substrats hängt dabei häufig auch von der Reinheit der Substratoberfläche ab.

In einer bevorzugten Ausführungsform des Verfahrens umfasst der Applikator

(i) einen Stempel mit einem Stempelkopf,
(ii) eine Stanzteilrolle, die ein Stanzteilband beinhaltet, das aus den auf der Linerschicht aufgebrachten Stanzteilen

gebildet ist, die mindestens eine (Haft-)Klebmasseschicht umfassen, sowie
(iii) eine Liner-Aufwickelrolle,

wobei in dem Verfahren das Stanzteilband über den Stempelkopf des Stempels läuft, wobei das Stanzteilband gestoppt wird, wenn eines der Stanzteile über dem Stempelkopf positioniert ist und der Stempel dann in einer Auf-und-ab-Bewegung das Stanzteil auf die Oberfläche klebt.

Besonders günstig ist es, wenn das Verhältnis von Abzugskraft des Stanzteils von der Linerschicht in z-Richtung zur Abzugskraft des Stanzteils von der Oberfläche in z-Richtung höchstens 0,15, vorzugsweise höchstens 0,12 und insbesondere höchstens 0,10 beträgt.

Das erfindungsgemäße Verfahren ist sowohl für das manuelle Aufbringen von Stanzteilen wie auch für ein automatisiertes Aufbringen geeignet. Gerade beim automatisierten Aufbringen bringt das erfindungsgemäße Verfahren große Vorteile mit sich, weil hier dem Spendeerfolg eine besonders große Bedeutung zukommt. Ein zuverlässiges Kleben der Stanzteile auf der Oberfläche ist besonders wichtig, da anders als beim manuellen Aufbringen, wo der Anwender sofort sieht, ob das Stanzteil zufriedenstellend aufgeklebt wurde, üblicherweise gerade keine unmittelbare Kontrolle des Spendeerfolgs durchgeführt wird. Zudem wird das automatisierte Aufbringen häufig zum Aufbringen zahlreicher Verklebungen auf ein großes Bauteil genutzt, wobei die Fehlertoleranz beim Übertragen der einzelnen Stanzteile besonders gering ist, da bereits ein einzelner Fehler zu einer insgesamt fehlerhaften Verklebung des großen Bauteils führt. Beim manuellen Verkleben kleinerer Bauteile unter Verwendung von wenigen Stanzteilen ist die Fehlertoleranz vergleichsweise hoch, da Fehler dabei typischerweise relativ einfach erkannt und behoben werden können. Ein Spendeerfolg von beispielsweise 75% ist hier üblicherweise, aufgrund der direkten Kontrollmöglichkeit durch den Mitarbeiter, völlig ausreichend.

Besonders geeignet ist das erfindungsgemäße Verfahren daher für die automatisierte Klebung von Stanzlingen. Vorteilhafterweise ist dabei eine Steuerung, die mit einem ersten Sensor, der mit einem Abtastbereich auf den Stempelkopf gerichtet ist und das Vorhandensein eines der Stanzteile am Stempelkopf registriert, signalleitend verbunden. Dieses kann z.B. durch eine farbliche Steuermarkierung erfolgen, es sind aber auch andere Erfassungsmöglichkeiten denkbar. Die Steuerung ist mit dem Sensor signalleitend verbunden, und Messwerte des Sensors werden der Steuerung zugeführt. Die Steuerung ist ferner mit einem frei beweglichen Roboterarm, an dem der Applikator angeordnet ist, signalleitend verbunden. Der Roboterarm steuert zum einen eine Auf-und-ab-Bewegung des Applikators in der z-Richtung senkrecht zur Oberfläche und zum anderen eine Bewegung in einer xy-Ebene parallel zur Oberfläche. Der Roboterarm ist in der Lage, entsprechend auf die Steuerungssignale zu reagieren. Dabei stoppt die Aufwickelrolle bei Registrierung eines der Stanzteile am Stempelkopf und treibt dann eine Ab-Bewegung des Roboterarms mit dem Applikator zum Aufkleben des Stanzteiles auf der Oberfläche und eine anschließende Auf-Bewegung des Roboterarms mit dem Applikator zur Rückkehr in die Ausgangsposition an.

Vorteilhafterweise wird des Weiteren der getaktete Vortrieb des Stanzteilbandes gesteuert, mit dem das nachfolgende Stanzteil auf dem Stempelkopf positioniert werden kann. Der Vortrieb des Stanzteilbandes kann als angetriebene erste Aufwickelrolle für das Stanzteilband ausgebildet sein.

Geeigneter Weise wird dabei nach Aufkleben des Stanzteiles auf die Oberfläche das Stanzteilband um ein Stanzteil weitergetaktet. Ganz besonders günstig erfolgt das Verfahren derart, dass die Steuerung den Roboterarm ansteuert und den Stempelkopf in eine erste Position über der Oberfläche bewegt, so dass das Stanzteil in einer ersten Oberflächenposition aufgeklebt wird, und nach dem Aufkleben des Stanzteils den Roboterarm ansteuert und den Stempelkopf während der Weitertaktung des Stanzteilbandes in eine zweite Position über der Oberfläche bewegt und dort eine Ab-Bewegung und eine anschließende Auf-Bewegung des Roboterarms mit dem Applikator zum Aufkleben des nächsten Stanzteils antreibt. Mit einem solchen Verfahren ist ein sehr schnelles Applizieren der Stanzteile auf die zu beklebende Oberfläche möglich.

Oftmals ist es wünschenswert, den Anpressdruck sehr genau festlegen und dessen Einhaltung sicherstellen zu können. Vorteilhafterweise ist der Stempelkopf daher federnd gelagert und dem Stempelkopf mindestens ein Drucksensor zugeordnet, der die Andruckkraft des Stanzteils auf der Oberfläche detektiert. Auf diese Weise kann auch sichergestellt werden, dass im Falle von empfindlichen Bauteilen eine Verformung derselben verhindert wird, da ein hinreichend geringer Andruck sichergestellt werden kann.

Auch die Applikationsspitze, also die Spitze des Applikators, kann unterschiedlich ausgeführt sein. Sie kann beispielsweise eine gummierte Oberfläche aufweisen, wodurch ein besseres Angleichen des applizierten Stanzteils an gebogene Konturen des zu beklebenden Substrats ermöglicht werden.

Damit der Applikator von der ersten Position zur nächsten Position verbracht wird, ist der Steuerung vorzugsweise ein Öffnungsmuster oder Klebemuster in der Robotersteuerung einprogrammiert. Die Steuerung kann dazu als NC-Steuerung ausgebildet sein. Es ist auch denkbar, dass ein zweiter Sensor vorgesehen ist, der bestimmte Merkmale beim Überfahren der Oberfläche registriert, die auf die Klebestellen hinweisen. Es kann auch eine Kombination aus NC-Steuerung und Sensorik vorgesehen sein.

Günstigerweise steuert die Steuerung den Roboter an, der den Applikator samt Stempelkopf in eine erste

Position über der Oberfläche bewegt und das Stanzteil an einer ersten Oberflächenposition aufklebt. Sie steuert nach dem Aufkleben des Stanzteils den Roboter wiederum an und bewegt den Applikator samt Stempelkopf in der xy-Ebene in eine zweite Position über der Oberfläche; dort wird das nächste Stanzteil durch eine Ab-Bewegung in z-Richtung an der nächsten gewünschten Stelle auf die Oberfläche aufgeklebt.

Günstigerweise ist eine Stanzteilrolle auf einer Zuführseite des Stempelkopfes und die Aufwickelrolle auf einer Abführseite des Stempelkopfes vorgesehen. Die Aufwickelrolle ist mit der Steuerung signalleitend verbunden, und auf ihr ist der Liner aufwickelbar. Die Steuerung dreht die Aufwickelrolle getaktet. Dabei entspricht der Vorschub eines Taktes jeweils dem Abstand benachbarter Stanzteile auf dem Stanzteilband.

Der Stempelkopf kann zur verbesserten Aufbringung mit einer 45° angeschrägten Fläche ausgestattet sein, von der aus ebenfalls Stanzlinge appliziert werden können. Diese verfügt über die gleichen steuerungstechnischen Einbindungen wie die horizontale Fläche.

Erfindungsgemäß wird das Stanzteilband gestoppt, wenn ein Stanzteil über dem Stempelkopf positioniert ist, und der Stempel wird dann in einer Ab-Bewegung mittels eines Roboterarms auf die Oberfläche bewegt und das Stanzteil auf die Oberfläche geklebt. Während der Ab-Bewegung wird das Stanzteilband etwas nachgeführt, damit das Stanzteil nicht vom Stempelkopf rutscht. Eine Andruckfläche oder zumindest Außenkontur des Stempelkopfes ist dem Stanzteil identisch. Ebenso wird das Stanzteilband während der Auf-Bewegung ebenfalls durch Nachführen des Stanzteilbandes gespannt gehalten.

Aufgrund der Auf-und-ab-Bewegung des Stempelkopfes in der z-Richtung wird nur sehr wenig Platz in der xy-Ebene benötigt, um ein Stanzteil auf einer Oberfläche aufzubringen. Dies ist ein Vorteil gegenüber den bekannten Etikettenspendern.

Die Besonderheit an der vorliegenden Erfindung ist, dass sie für die unterschiedlichsten Systeme in Bezug auf Klebemasse und Liner funktioniert, solange sie dem erfindungsgemäßen Abzugskraftverhältnis genügen.

Dabei ist die vorliegende Erfindung sowohl für doppelseitige Klebebänder und Stanzteile, die verwendet werden, um zwei Teile miteinander zu verbinden, wie auch für einseitige Klebebänder und Stanzteile geeignet. Letztere kommen in der Automobilindustrie z.B. zum Einsatz, um Löcher, die im Rahmen des Herstellungsprozesses erforderlich waren, aber am fertigen Produkt nicht sichtbar sein sollen, zu verschließen.

Bei den Stanzteilbändern handelt es sich um Klebebänder. Der allgemeine Ausdruck "Klebeband" (Haftklebeband) umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen. Unter Stanzteilbändern werden solche Klebebänder verstanden, bei denen das Klebeband bereits im Vorwege in einzelne Abschnitte konfektioniert vorliegt.

Das Klebeband weist somit eine Längsausdehnung (x-Richtung) und eine Breitenausdehnung (y-Richtung) auf. Das Klebeband weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Klebebandes möglichst gleich, vorzugsweise exakt gleich.

In einer bevorzugten Ausführungsform der vorliegenden Erfindung besteht das erfindungsgemäß eingesetzte Klebeband aus einer einzigen Haftklebemasseschicht. Ein solches einschichtiges, beidseitig klebendes Klebeband, d.h. doppelseitiges Klebeband, wird auch als "Transfertape" bezeichnet. In einer alternativen Ausführungsform umfasst das erfindungsgemäß eingesetzte Klebeband eine Trägerschicht und mindestens eine, vorzugsweise zwei Haftklebemasseschichten, wobei die Haftklebemasseschichten auf den gegenüber liegenden Oberflächen der Trägerschicht angeordnet sind und die eine äußere obere und eine äußere untere Fläche des Haftklebstreifens bilden. Dabei handelt es sich somit um ein einseitiges Klebeband bzw. ebenfalls um ein doppelseitiges Klebeband. Auch ist es möglich, dass weitere Schichten und/oder Zwischenliner zum Einsatz kommen. So ist zwecks Einstellen der Eigenschaften auch die Verwendung verschiedener Klebemasseschichten oder eine Kombination aus Klebemassen- und Trägerschichten möglich. Zu den Eigenschaften, die auf diese Weise beeinflusst werden können, zählen Dicke, Steifigkeit, Biegsamkeit, Temperaturbeständigkeit, Elastizität und Flammfestigkeit des Klebebandes. Geeignete und erfindungsgemäße Klebebänder umfassen somit ein- und mehrschichtige Klebebänder.

Der Begriff "Haftklebemasse" beschreibt im Rahmen der Erfindung Materialien (zum Beispiel Elastomere), die entweder inhärent klebrig sind, oder durch das Hinzufügen von klebrigmachenden Harzen ("Tackifier") so formuliert werden, dass sie klebrig sind. Gemäß der vorliegenden Erfindung umfassen Haftkleber und/oder Haftklebeprodukte Materialien und/oder Fertigprodukte, die durch eines der allgemein bekannten Verfahren zur Bestimmung von Haftklebern als solche eingestuft werden. Insbesondere sind solche Materialien und/oder Fertigprodukte gemeint, die durch eines oder mehrere der folgenden Verfahren als Haftkleber eingestuft werden können. Entsprechend einem ersten Verfahren werden Haftkleber durch die Dahlquist-Kriterien definiert, die im D. Satas, Handbook of Pressure Sensitive Adhesives, 2nd Edition, Seite 172, 1989 beschrieben werden. Ein Material wird gemäß eines dieser Kriterien als ein guter Haftkleber definiert, wenn es bei Anwendungstemperatur ein Elastizitätsmodul von kleiner als $1*10^6$ Pa aufweist.

Die Stanzteile eines Stanzteilbandes sind in allen denkbaren Größen und Formen gestaltbar, beispielsweise als vollflächiger Stanzling mit gleichen oder unterschiedlichen Kantenlängen, runden oder scharfen Ecken oder auch

speziell angepassten Formen, aber auch als ausgestanzter Rahmen in allen denkbaren Größen, Formen und Stegbreiten. Durch die Größe des Stanzteils kann die Haltekraft des einzelnen Verbindungspunktes angepasst werden. Die Stanzteile können direkt auf dem Liner liegen, ohne auf der anderen Seite mit einem weiteren Liner abgedeckt zu sein, und werden so der Verarbeitung zugeführt. In diesem Fall sollte das Bauteil direkt weiterverarbeitet werden.

Allgemein bietet es sich an, Stanzteile mittels maschinell automatisierten Prozessen zu applizieren bzw. auf Bauteilen zu verkleben. Hierbei kann ein eventuell noch vorhandener Liner bei Bedarf entfernt werden.

Weiterhin kann das Klebeband schon in Segmente geschnitten auf Rollen vorliegen, wie zum Beispiel zur Montage von Verkabelungen im Automobilbereich. Dies ermöglicht das Abziehen von einzelnen Stücken vom Liner. Im Gegensatz zu den üblichen Stanzteilen sind die Stücke hier aneinanderliegend auf dem Liner und damit immer rechteckig.

Erfindungsgemäße Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt. Ein Liner (Trennpapier, Trennfolie) ist nicht Bestandteil eines Haftklebestreifens, sondern nur ein Hilfsmittel zu dessen Herstellung, Lagerung und/oder für die Weiterverarbeitung durch Stanzen. Darüber hinaus ist ein Liner im Gegensatz zu einem (permanenten) Klebebandträger nicht fest mit einer Klebstoffschicht verbunden, so dass er auch als temporärer Träger bezeichnet wird. Die Liner sorgen des Weiteren dafür, dass die Klebmasse vor der Anwendung nicht verschmutzt wird. Zusätzlich können Liner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Liner zusätzlich dafür, dass beim Abrollen die richtige Seite der Klebemasse zuerst freigelegt wird.

Klebemassen können in lösemittelhaltigen oder lösemittelfreien Prozessen hergestellt werden, mittels flüssiger Beschichtung, Extrusion oder anderen geeigneten Verfahren. Die Beschichtung erfolgt in einem oder mehreren Arbeitsgängen, inklusive Coextrusion oder mehrlagiger Düsenbeschichtung, oder Lamination.

Dabei kann entweder das eigentliche Linermaterial als solches bereits antiadhäsiv sein, oder aber es ist zumindest einseitig, vorzugsweise beidseitig, antiadhäsiv beschichtet, wie zum Beispiel silikonisiert. Umfasst sind insbesondere alle bahnförmigen Schichten, die geeignet vom Klebeband getrennt werden können, zum Beispiel auch solche mit einer eigenen Haftklebrigkeit.

Als Liner werden typischerweise Papier- oder Folienträger verwendet, die ein- oder insbesondere beidseitig mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Linerfür Selbstklebebänder basieren häufig auf biaxial oder monoaxial gerecktem Polypropylen, auf Polyethylen oder anderen Polyolefinen, auf Papier oder auf Polyester. Als abhäsive Beschichtungsmassen, die auch Releasebeschichtung genannt werden, können eine Vielzahl verschiedener Stoffe eingesetzt werden: Wachse, fluorierte oder teilfluorierte Verbindungen, Carbamat-Lacke und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt. Zudem können als Liner strukturierte Liner oder Liner mit Füllstoffen oder anderen partikulären Stoffen oder Partikeln in oder an der Oberfläche, oder Liner bestehend aus oder beschichtet mit sonstigen geeigneten trennenden Schichten oder Beschichtungen eingesetzt werden.

Erfindungsgemäß gibt es auch Träger, die je nachdem, auf welcher Seite die Klebeschicht aufgebracht wird, als temporärer Träger (Liner) oder aber als permanenter Träger (d.h. Träger im Sinne der Anmeldung) fungieren. Weist ein Träger nur eine einzige antiadhäsive Oberfläche auf, während die gegenüberliegende Oberfläche nicht antiadhäsiv ist (z.B. ein einseitig silikonisierter PET-Träger), so fungiert er bei Aufbringung der Klebeschicht auf die antiadhäsive Oberfläche als Liner, während er bei Aufbringung der Klebeschicht auf die nicht antiadhäsive Oberfläche als Träger fungiert.

Als Produktaufbauten sind hinsichtlich des Klebebandes verschiedene denkbar. Stets ist zumindest eine Schicht einer selbstklebenden Masse vorhanden. Diese Schicht kann dabei eine Dicke von 15 bis 5000 $\mu$m, vorzugsweise 50 bis 3000 $\mu$m, bevorzugter 100 $\mu$m bis 2000 $\mu$m, noch bevorzugter 150 $\mu$m bis 2000 $\mu$m, noch bevorzugter 400 bis 1500 $\mu$m, insbesondere 1000 bis 1200 $\mu$m, wie zum Beispiel 500 bis 800 $\mu$m aufweisen. Im Haftklebestreifen können weitere Schichten enthalten sein wie z.B. weitere Klebeschichten. Darüber hinaus können nichtklebrige Schichten, worunter insbesondere wenig dehnbare ($\varepsilon_{max}$ < 100 %) oder dehnbare ($\varepsilon_{max}$ mindestens 100 %) Trägerschichten zu verstehen sind, im Klebeband enthalten sein. Ein etwaig vorhandener Träger ist vorzugsweise eine Trägerfolie, zum Beispiel aus Polypropylen, Polyethylen oder Polyester. Für strippfähige Haftklebebänder werden bevorzugt elastische Träger eingesetzt, wie zum Beispiel ein viskoelastischer Acrylatschaum, der beispielsweise mit Mikroballons geschäumt ist. Der Acrylatschaum kann alternativ auch Hohlglaskugeln enthalten.

Ein Klebeband, das für das erfindungsgemäße Verfahren besonders geeignet ist, kann beispielsweise mindestens eine Haftklebemasseschicht umfassen, die auf Acrylat(co)polymer, Silikon(co)polymer, Naturkautschuk, Nitrilkautschuk, d.h. Acrylnitril-Butadien-Kautschuk, (ggf. chemisch oder physikalisch vernetztem) Synthesekautschuk wie Vinylaromatenblockcopolymer oder einer Mischung davon basiert.

Beispielhaft einsetzbare Kautschuke, gegebenenfalls ESH-vernetzt, sind in EP 2832779 A1 beschrieben. Dabei kann es sich zum Beispiel um natürliche Kautschuke, synthetische Kautschuke, thermoplastische elastomere Materialien, nicht-thermoplastische elastomere Materialien, thermoplastische elastomere Kohlenwasserstoffmaterialien, nicht-thermoplastische elastomere Kohlenwasserstoffmaterialien und beliebige Kombinationen oder Mischungen davon handeln. Gemäß einer bevorzugten Ausführungsform ist der Kautschuk ausgewählt aus der Gruppe bestehend aus halogenierten Butylkautschuken, insbesondere Brombutylkautschuken wie Brombutylkautschuk 2030 von Lanxess (BB2030, Brombutylkautschuk mit einer Mooney-Viskosität ML (1 + 8) 125 °C von 32) oder Brombutylkautschuk X2 von Lanxess (BBX2, Brombutylkautschuk mit einer Mooney-Viskosität ML (1 + 8) 125 °C von 46) und Chlorbutylkautschuken; halogenierten Isobutylen-Isopren-Copolymeren; Bromisobutylen-Isopren-Copolymeren; Chlorisobutylen-Isopren-Copolymeren; Blockcopolymeren; olefinischen Blockcopolymeren wie Infuse 9807 von Dow (Ethylen/Octen-Blockcopolymer) oder Vestoplast751 von Evonik (V751, amorphes Polyalphaolefin (Ethen-Propen-Buten-Copolymer mit einem Erweichungspunkt von 99° C); Butylkautschuken; synthetischen Polyisoprenen; Ethylen-Octylen-Kautschuken; Ethylen-Propylen-Kautschuken; statistischen Ethylen-Propylen-Copolymeren; Ethylen-Propylen-Dien-Monomer-Kautschuken; Polyisobutylenen; Poly (alpha-olefinen); Ethylen-$\alpha$-Olefin-Copolymeren; Ethylen-$\alpha$-Olefin-Blockcopolymeren; Styrol-Block-Copolymeren; Styrol-Isopren-Styrol-Blockcopolymeren; Styrol-Butadien-Styrol-Blockcopolymeren; Styrol-Ethylen/Butadien-Styrol-Blockcopolymeren; Styrol-Ethylen/Propylen-Styrol-Block-copolymeren; statistischen Styrol-Butadien-Copolymeren; olefinischen Polymeren und Copolymeren; statistische Ethylen-Propylen-Copolymeren; Ethylen-Propylen-Dien-Terpolymeren und beliebigen Kombinationen oder Mischungen davon. Gemäß einer bevorzugten Ausführungsform ist der Kautschuk ausgewählt aus der Gruppe bestehend aus halogenierten Isobutylen-Isopren-Copolymeren; insbesondere Bromisobutylen-Isopren-Copolymeren, Chlor-Isobutylen-Isopren-Copolymeren; olefinischen Block-copolymeren, insbesondere Ethylen-Octylen-Blockcopolymeren, Ethylen-Propylen-Butylen-Copolymeren; Styrol-Isopren-Styrol-Blockcopolymeren; Styrol-Butadien-Styrol-Blockcopolymeren und beliebigen Kombinationen oder Mischungen davon. Gemäß noch einer weiteren bevorzugten Ausführungsform ist der Kautschuk ausgewählt aus der Gruppe bestehend aus halogenierten Isobutylen-Isopren-Copolymeren; insbesondere Bromisobutylen-Isopren-Copolymeren, Chlor-Isobutylen-Isopren-Copolymeren; olefinischen Blockcopolymeren, insbesonderen Ethylen-Octylen-Blockcopolymeren, Ethylen-Propylen-Butylen-Copolymeren und beliebigen Kombinationen oder Mischungen davon.

In einer bevorzugten Ausführungsform ist die Haftklebemasseschicht geschäumt, insbesondere mit Mikroballons.

Häufig enthält die Haftklebemasse zudem Klebharz zur Einstellung der Adhäsion. Beispielsweise kann Kohlenwasserstoffklebharz eingesetzt werden, wobei das Kohlenwasserstoffklebharz vorzugsweise einen Gehalt an flüchtigen organischen Verbindungen (VOC) von weniger als 1000 ppm aufweisen und einen Gehalt an flüchtigen Fogging-Verbindungen (FOG) von weniger als 1500 ppm aufweist, jeweils gemessen durch thermogravimetrische Analyse. Solche Klebharze sind in EP 2 832 779 A1 offenbart. Um derartige Klebharze handelt es sich zum Beispiel bei Regalite R9100 von Eastman (teilhydriertes Kohlenwasserstoffharz), Regalite R1090 von Eastman (hydriertes Kohlenwasserstoffharz), Piccotac 1020E von Eastman (flüssiges aliphatisches Kohlenwasserstoffharz), Plastolyn R1140 von Eastman (hydriertes Kohlenwasserstoffharz), Escorez 1304 von ExxonMobil (aliphatisches Kohlenwasserstoffharz), Escorez 5615 von ExxonMobil (aliphatisch/aromatisches Kohlenwasserstoffharz), Escorez 5320 von ExxonMobil (hydriertes cycloaliphatisches Kohlenwasserstoffharz) und Escorez 5340 von Exxon Mobil (hydriertes cycloaliphatisches Kohlenwasserstoffharz).

Zudem kann die Haftklebemasse mittels UV, Elektronenstrahlen oder sonstigen Strahlen oder thermisch vernetzt sein. Geeignete Prozesse auf Basis von UV-Polymerisation sind außerdem beschrieben in DE69214438 T2 oder US7491434 B2.

Eine Acrylathaftklebemasse ist dabei für die Klebebänder besonders bevorzugt. Alternativ ist eine Haftklebemasse auf Basis von Synthesekautschuk wie Vinylaromatenblockcopolymer bevorzugt.

Wird eine Haftklebemasse auf Basis von Synthesekautschuk eingesetzt, so enthält diese bevorzugt insgesamt 15 bis 50 Gew.-% Synthesekautschuk, stärker bevorzugt insgesamt 20 bis 40 Gew.-%, jeweils bezogen auf das Gesamtgewicht der Haftklebmasse. Es können ein Synthesekautschuk oder mehrere Synthesekautschuke in der erfindungsgemäßen Haftklebmasse enthalten sein.
Bevorzugt ist der Synthesekautschuk der erfindungsgemäßen Haftklebemasse ein Blockcopolymer mit einem Aufbau A-B, A-B-A, $(A-B)_n$, $(A-B)_nX$ oder $(A-B-A)_nX$,
worin

- die Blöcke A unabhängig voneinander für ein Polymer, gebildet durch Polymerisation mindestens eines Vinylaromaten;

- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke der erfindungsgemäßen Haftklebmasse Blockcopolymere mit einem Aufbau wie vorstehend dargelegt. Die erfindungsgemäße Haftklebmasse kann somit auch Gemische verschiedener Blockcopolymere mit einem Aufbau wie vorstehend enthalten.

Die bevorzugten Synthesekautschuke, die auch als Vinylaromatenblockcopolymere bezeichnet werden, umfassen also einen oder mehrere gummiartige Blöcke B (Weichblöcke) und einen oder mehrere glasartige Blöcke A (Hartblöcke). Besonders bevorzugt ist der Synthesekautschuk der erfindungsgemäßen Haftklebmasse ein Blockcopolymer mit einem Aufbau A-B, A-B-A, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Haftklebmasse Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk der erfindungsgemäßen Haftklebmasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Der Block A ist insbesondere ein glasartiger Block mit einer bevorzugten Glasübergangstemperatur ($T_g$), die oberhalb der Raumtemperatur liegt. Besonders bevorzugt liegt die $T_g$ des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an der Gesamtheit der Blockcopolymere beträgt bevorzugt 10 bis 40 Gew.-%, besonders bevorzugt 20 bis 33 Gew.-%. Vinylaromaten zum Aufbau des Blocks A umfassen bevorzugt Styrol und $\alpha$-Methylstyrol. Der Block A kann somit als Homo- oder Copolymer vorliegen. Besonders bevorzugt ist der Block A ein Polystyrol.

Der Block B ist insbesondere ein gummiartiger Block bzw. Weichblock mit einer bevorzugten Tg von kleiner als Raumtemperatur. Die $T_g$ des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Weiterhin besonders bevorzugt ist die mindestens eine Klebmasseschicht aus einer selbstklebenden Masse, die auf Vinylaromatenblockcopolymer basiert und Klebharz enthält, wobei das Vinylaromatenblockcopolymer

- mindestens einen Polymerblock A enthält, der überwiegend durch Polymerisation von Vinylaromaten gebildet ist, und
- gleichzeitig mindestens einen Polymerblock B enthält, der überwiegend durch Polymerisation von konjugierten Dienen gebildet ist, wobei der Anteil an 1,2-verknüpften konjugiertem Dien im B-Block weniger als 30 Gew.-% beträgt, vorzugsweise weniger als 20 Gew.-% (wie beispielsweise mittels $^1$H-NMR bestimmbar).

Der Polymerblock B des Vinylaromatenblockcopolymers ist erfindungsgemäß überwiegend durch Polymerisation von konjugierten Dienen gebildet. Das bedeutet, dass der Block B typischerweise aus einer Polymerisation hervorgegangen ist, bei der mehr als 50 Gew.-% der eingesetzten Monomere konjugierte Diene sind, d.h. der Anteil an konjugiertem Dien beim Polymerisieren beträgt mehr als 50 Gew.-%. Vorzugsweise geht der Polymerblock B aus einer Polymerisation hervor, bei dem als Monomere ausschließlich konjugierte Diene eingesetzt worden sind.

Ferner beträgt der Anteil an 1,2-verknüpftem konjugiertem Dien im B-Block weniger als 30 Gew.-%, vorzugsweise weniger als 20 Gew.-%, bevorzugter weniger als 15 Gew.-% und insbesondere etwa 10 Gew.-%. Mit dem Anteil an 1,2-verknüpftem konjugiertem Dien im B-Block ist der Gewichtsanteil an konjugiertem Dien, das durch 1,2-Addition (im Gegensatz zur 1,4-Addition) einpolymerisiert worden ist, gemeint, bezogen auf die bei der Herstellung des Polymerblocks B eingesetzte gesamte Monomermasse. Die 1,2-Addition von konjugiertem Dien führt zu einer vinylischen Seitengruppe im Polymerblock B, während die 1,4-Addition von konjugiertem Dien zu einer vinylischen Funktionalität in der Hauptkette des Polymerblocks B führt. Mit der 1,2-Addition eines konjugierten Diens ist somit gemeint, dass die Dienfunktionalität entweder an den Positionen C1 und C2, oder an den Positionen C3 und C4 (zum Beispiel im Fall von Isopren als konjugiertem Dien) einpolymerisiert wird, im Gegensatz zur 1,4-Addition eines konjugierten Diens, bei der die Dienfunktionalität an den Positionen C1 und C4 einpolymerisiert wird.

Die Haftklebemasse weist typischerweise neben dem mindestens einen Synthesekautschuk wie Vinylaromatenblockcopolymer mindestens ein Klebharz auf, um die Adhäsion in gewünschter Weise zu erhöhen. Das Klebharz sollte mit dem Elastomerblock (Weichblock) der Blockcopolymere verträglich sein. Geeignete Klebharze sind unter anderem vorzugsweise nicht hydrierte, partiell oder vollständig hydrierte Harze auf Basis von Kolophonium oder Kolophoniumderivaten. Idealerweise ist es nicht verträglich mit den Acrylatpolymeren des viskoelastischen Polyacrylatschaumträgers. Geeignete Klebharze sind unter anderem vorzugsweise hydrierte Polymerisate des Dicyclopentadiens, nicht hydrierte, partiell, selektiv oder vollständig hydrierte Kohlenwasserstoffharze auf Basis von C5-, C5/C9-, C9-Monomerströmen, oder besonders bevorzugt Polyterpenharze auf Basis von $\alpha$-Pinen und/oder $\beta$-Pinen und/oder $\delta$-Limonen. Vorgenannte Klebharze können sowohl allein als auch im Gemisch eingesetzt werden. Zudem kann die Klebmasseformulierung auch Klebharze enthalten, die bei Raumtemperatur flüssig sind.

Die mindestens eine Klebmasseschicht ist vorzugsweise geschäumt, beispielsweise mit Mikroballons. Unter einer "geschäumten Haftklebmasseschicht" wird eine Haftklebmasseschicht verstanden, die ein haftklebriges Matrixmaterial und mehrere gasgefüllte Hohlräume umfasst, so dass die Dichte dieser Haftklebmasse im Vergleich zum bloßen Matrixmaterial ohne Hohlräume verringert ist. Durch die Schäumung von Selbstklebemassen, insbesondere mittels Mikroballons, können nicht lediglich Rohstoffkosten eingespart werden, sondern diese führt typischerweise ferner zum Beispiel zu einer Erhöhung der Kohäsion des Produktes, zu einer verbesserten Verklebungsfestigkeit auf rauen Untergründen sowie zu erhöhten Schockresistenzen. Alternativ kann die Klebmasseschicht auch ungeschäumt sein.

Die Schäumung des Matrixmaterials der Haftklebmasseschicht kann grundsätzlich auf jede beliebige Art und Weise bewirkt werden.

Beispielsweise kann die Haftklebmasse mittels eines eingebrachten oder in ihr freigesetzten Treibgases geschäumt werden. Als eingebrachtes Treibgas kommen dabei zum Beispiel $CO_2$ oder $N_2$ in Frage, ggf. auch als superkritisches Fluid.

Zwecks Freisetzung eines Treibgases kann der Haftklebmasse alternativ ein sich unter Gasfreisetzung thermisch zersetzendes Treibmittel beigemischt sein, z.B. $NaHCO_3$, die freien Säuren oder Derivate von Zitronensäure, Ascorbinsäure, Fumarsäure, Gluconsäure oder Milchsäure oder exotherme Treibmittel wie Azodicarbonamid.

Auch mechanisches Schäumen (Frothing) kommt in Frage.

In einer Ausführungsform enthält die geschäumte Haftklebmasseschicht zumindest teilweise expandierte Mikrohohlkugeln. Darunter werden zumindest teilweise expandierte Mikrokugeln verstanden, die in ihrem Grundzustand elastisch und expandierbar sind und eine thermoplastische Polymerhülle aufweisen. Diese Kugeln sind - im Grundzustand - mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind. Für derartige Mikrokugeln ist auch der Begriff "Mikroballons" gebräuchlich.

Durch Wärmeeinwirkung auf die Mikroballons erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung der geschäumten Haftklebmasse geeignet.

Eine geschäumte äußere Haftklebmasseschicht kann auch mit sogenannten vorexpandierten Mikrohohlkugeln erzeugt werden. Bei dieser Gruppe findet die Expansion schon vor der Einmischung in die Polymermatrix statt.

Erfindungsgemäß bevorzugt enthält die geschäumte Haftklebmasseschicht unabhängig von ihrem Herstellungsweg und von der eingesetzten Ausgangsform der Mikrohohlkugeln zumindest teilweise expandierte Mikrohohlkugeln. Der Begriff "zumindest teilweise expandierte Mikrohohlkugeln" wird erfindungsgemäß so verstanden, dass die Mikrohohlkugeln zumindest soweit expandiert sind, dass damit eine Dichteverringerung der Haftklebmasse in einem technisch sinnvollen Ausmaß im Vergleich zu derselben Klebmasse mit den unexpandierten Mikrohohlkugeln bewirkt wird. Dies bedeutet, dass die Mikroballons nicht zwingend vollständig expandiert sein müssen. Bevorzugt sind die "mindestens teilweise expandierten Mikrohohlkugeln" jeweils auf mindestens das Doppelte ihrer maximalen Ausdehnung im unexpandierten Zustand expandiert.

Der Ausdruck "zumindest teilweise expandiert" bezieht sich auf den Expansionszustand der individuellen Mikrohohlkugeln und soll nicht ausdrücken, dass nur ein Teil der in Betracht kommenden Mikrohohlkugeln (an)expandiert sein muss. Wenn also "zumindest teilweise expandierte Mikrohohlkugeln" und unexpandierte Mikrohohlkugeln in der Haftklebmasse enthalten sind, dann bedeutet dies, dass unexpandierte (gar nicht expandierte, also auch nicht anexpandierte) Mikrohohlkugeln nicht zu den "zumindest teilweise expandierten Mikrohohlkugeln" gehören.

Je nach Anwendungsgebiet und gewünschten Eigenschaften der erfindungsgemäßen Haftklebmasse kann diese weitere Komponenten und/oder Additive enthalten, und zwar jeweils allein oder in Kombination mit einem oder mehreren anderen Additiven oder Komponenten.

So kann die erfindungsgemäße Haftklebmasse beispielsweise Pulver- und granulatförmige, insbesondere auch abrasive und verstärkende, Füllstoffe, Farbstoffe und Pigmente wie z. B. Kreiden ($CaCO_3$), Titandioxid, Zinkoxide und/oder Ruße, enthalten.

Bevorzugt enthält die erfindungsgemäße Haftklebmasse eine oder mehrere Kreide(n) als Füllstoff. Die erfindungsgemäße Haftklebmasse enthält Kreide bevorzugt zu insgesamt bis zu 20 Gew.-%. Bei derartigen Anteilen verändern sich wesentliche klebtechnische Eigenschaften wie die Scherfestigkeit bei Raumtemperatur und die Sofortklebkraft auf Stahl und PE durch den Füllstoffzusatz praktisch nicht. Darüber hinaus können verschiedene organische Füllstoffe enthalten sein.

Geeignete Additive für die erfindungsgemäße Haftklebmasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons").

Weiterhin kann die erfindungsgemäße Haftklebmasse schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; thermisch leitfähige Materialien, beispielsweise Bornitrid, Aluminiumoxid, Siliciumcarbid; ferromagnetische Additive, beispielsweise Eisen-(III)-Oxide; organische, nachwachsende Rohstoffe, beispielsweise Holzmehl; organische und/oder anorganische Nanopartikel; Fasern, Compoundierungsmittel, Alterungsschutzmittel, Lichtschutzmittel und/oder Ozonschutzmittel enthalten.

Eine beispielhafte Haftklebemasseschicht und deren Herstellung (Hotmelt-Verfahren) in Form eines Transfertapes auf Basis von Vinylaromatenblockcopolymer wird im Folgenden offenbart und in der vorliegenden Anmeldung als Klebeband K2 bezeichnet. Die Rezeptur ist wie folgt: 25 Gew.-% Kraton D 1101 (Styrol-Butadien-Styrol-Triblockcopolymer der Firma Kraton Polymers mit 16 Gew.-% Diblock, Blockpolystyrolgehalt: 31 Gew.-%, Anteil an 1,2-verknüpftem konjugiertem Dien im Butadienblock: 10 Gew.-%), 25 Gew.-% Kraton D1118 (Styrol-Butadien-Styrol-Triblockcopolymer der Firma Kraton Polymers mit 78 Gew.-% Diblock, Blockpolystyrolgehalt: 33 Gew.-%, Anteil an 1,2-verknüpftem konjugiertem Dien im Butadienblock: 10 Gew.-%), 48 Gew.-% Dercolyte A115 der Firma DRT (festes $\alpha$-Pinen-Klebharz mit einer Ring und Ball-Erweichungstemperatur von 115 °C und einem DACP von 35 °C), 2 Gew.-% Piccolyte A25 der Firma Pinova (Polyterpenharz auf der Basis von $\alpha$-Pinen mit einer Ring und Ball-Erweichungstemperatur von 22 bis 28 °C), 3 Gew.-% Expancel 920DU40 der Firma Akzo Nobel (unexpandierte Mikroballons). Die Summe der Bestandteile exklusive der Mikroballons ergibt 100 Gew.-% und die Menge an Mikroballons bezieht sich auf die Summer der weiteren Bestandteile. Die Haftklebemasse wurde mittels eines Hotmelt-Verfahrens hergestellt. Die Zugabe der Elastomerkomponenten erfolgte im Einzug des PWE (Planetwalzenextruder), welcher einen Einzugsbereich und zwei Verfahrensteile umfasste. Die Anlaufringe hatten in Verfahrensrichtung einen zunehmenden Durchmesser. Obwohl unterschiedliche Spindelbestückungen geeignet waren, wurden Bestückungen bevorzugt, welche im ersten Verfahrensteil mindestens ¾ der maximalen Bestückungszahl betrugen. Die Harzkomponenten wurden aufgeschmolzen und im zweiten Verfahrensteil des PWE zugegeben. Besonders geeignet zur Herstellung von homogenen Mischungen war ein Harz-Split, in dem ein Teil des Harzes im ersten Verfahrensteil zugegeben wurde und der Rest downstream im zweiten Verfahrensteil. Besonders geeignet war dabei die Zugabe beider Anteile flüssig über Sidefeed oder Anlaufringe, wobei der erste Anteil ca. 10% der gesamten Harzmenge beträgt, und soweit nicht anders angegeben wurde das Verfahren so ausgeführt. Geeignet wäre auch die Zugabe des ersten Harzanteils fest im Einzug des PWE oder über Sidefeed im ersten Verfahrensteil. Die compoundierte Masse wurde über einen geheizten Schlauch in den Doppelschneckenextruder übergeben. Die Mikroballons wurden über einen Sidefeed im ersten Drittel des DSE (Doppelschneckenextruder) zugegeben und dort aufgeschäumt, so dass die Schäumung im Wesentlichen vor Austritt aus dem Aggregat beendet war. Durch Friktionswärme lag die Massetemperatur im DSE stets über den eingestellten Wandungstemperaturen. Am Ende des DSE war an einer geeigneten Stelle ein Vakuum angelegt. Die Masseaustrittstemperatur betrug ca. 130°C. Die Masse wurde dann über eine Vorverteildüse (Kleiderbügeldüse) in einen ZweiwalzenKalander übergeben und zwischen zwei beidseitig silikonisierten 50 $\mu$m PET-Folien ausgeformt. Durch dieses vorteilhafte Verfahren konnten stets Rauigkeiten $R_a < 5$ $\mu$m erreicht werden (gemessen mittels Weißlichtinterferometrie).

Tabelle 1 zeigt die Parameter des Hotmelt-Verfahrens.

Tabelle 1: Parameter des Hotmelt-Verfahrens (L/D = Länge / Durchmesser).

| | |
|---|---|
| Durchsatz Summe Elastomerkomponenten | 20 kg/h |
| Durchmesser Walzenzylinder | 70 mm |
| Temp. PWE Zentralspindel | 50 °C |

(fortgesetzt)

| | |
|---|---|
| Temp. PWE Zonen | 90 °C / 90 °C / 90 °C / 90 °C |
| PWE Drehzahl | 100 /min |
| Durchmesser DSE-Schnecken und L/D | 42 mm, 36 L/D |
| Temp. DSE Zonen | 20 °C / 50 °C / 80 °C / 80 °C |
| DSE Drehzahl | 100 /min |
| Vakuum DSE | 200 mbar |
| Temp. Kalanderwalzen | 120 °C / 120 °C |

In einer anderen bevorzugten Ausführungsform ist das Klebeband, aus dem die Stanzteile gebildet sind, ein Klebeband mit einem acrylatbasierten, viskoelastischen Schaum, auf den mindestens einseitig, vorzugsweise beidseitig eine Haftklebemasseschicht aufgebracht sein kann. Bei der aufgebrachten Haftklebemasse kann es sich zum Beispiel um eine Haftklebemasse auf Basis von Synthesekautschuk wie Vinylaromatenblockcopolymer (beispielsweise wie vorstehend definiert) handeln. Alternativ kann es sich beispielsweise um eine Haftklebemasse auf Basis von Acrylat handeln. Diese kann definiert sein wie der vorstehend beschriebene Acrylatschaum, wobei die Haftklebemasse aus Basis von Acrylat geschäumt oder ungeschäumt sein kann. Gleiches gilt für ein beliebiges erfindungsgemäßes Klebeband, das eine Acrylathaftklebemasse umfasst. Eine Acrylatklebemasse kann in einer Ausführungsform neben dem Polyacrylat auch weitere Elastomere enthalten wie zum Beispiel Synthesekautschuk.

Gemäß einer bevorzugten Ausführungsform bildet ein syntaktischer Schaum den viskoelastischen Schaum. Bei einem syntaktischen Schaum sind Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt. Dadurch ist das Material wesentlich stärker als herkömmliche Schäume mit unverstärkten Gaseinschlüssen.

Die viskoelastischen Schäume des erfindungsgemäßen Klebebands, die mittels der später dargestellten erfindungsgemäßen Verfahren hergestellt werden, können neben dem erfindungsgemäß vorgesehenen Polyacrylat alle dem Fachmann bekannten Polymere und/oder Mischungen aus Polymeren umfassen. Bevorzugt besteht der Schaum nur aus Polyacrylat als Gerüstpolymer.

Das Polyacrylat ist bevorzugt durch eine freie oder kontrollierte radikalische Polymerisation einer oder mehrerer (Meth)Acrylsäuren oder (Meth)Acrylsäureester erhältlich und wird besonders bevorzugt thermisch vernetzt, um - gerade im Falle dicker Schaumschichten - einen Vernetzungsgradienten zu verhindern, welcher zwangsläufig aus einem photochemischen Vernetzungsverfahren oder einer Elektronenstrahlvernetzung resultiert.

In einer bevorzugten Variante werden für den viskoelastischen Schaum thermischvernetzbare Polymere auf Poly(meth)acrylatbasis eingesetzt. Die Masse umfasst vorteilhaft ein Polymer, bestehend aus

(a1) 70 bis 100 Gew.-% Acrylsäureester und/oder Methacrylsäureester und/oder deren freien Säuren folgender Strukturformel

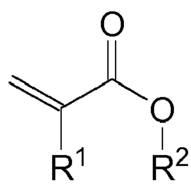

,

wobei $R^1$ H oder $CH_3$ darstellt und $R^2$ H oder Alkylketten mit 1 bis 14 C-Atomen darstellt;
(a2) 0 bis 30 Gew.-% olefinisch ungesättigte Monomere mit funktionellen Gruppen und
(a3) optional weitere Acrylate und/oder Methacrylate und/oder olefinisch ungesättigte Monomere (vorzugsweise mit einem Anteil zwischen 0 bis 5 Gew.-%), die mit der Komponente (a1) copolymerisierbar sind und eine funktionelle Gruppe aufweisen, die mittels des Kupplungsreagenzes zu einer kovalenten Vernetzung führt.

Die Gewichtsangaben beziehen sich auf das Polymer.

Vorzugsweise werden für die Monomere (a1) Acrylmomonere, umfassend Acryl- und Methacrylsäureester mit Alkylgruppen, bestehend aus 1 bis 14 C-Atomen, eingesetzt. Spezifische Beispiele, ohne sich durch diese Aufzählung

einschränken zu wollen, sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat und deren verzweigte Isomere wie zum Beispiel 2-Ethylhexylacrylat.

Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Deren Anteil beträgt vorzugsweise maximal bis zu 20 Gew.-%, weiter vorzugsweise maximal bis zu 15 Gew.-%, jeweils bezogen auf die Gesamtmenge an Monomeren (a1).

Vorzugsweise werden für (a2) Monomere verwendet wie beispielsweise Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, wobei diese Aufzählung nicht abschließend ist.

Ebenso bevorzugt werden für die Komponente (a2) aromatische Vinylverbindungen eingesetzt, wobei die aromatischen Kerne bevorzugt aus $C_4$- bis $C_{18}$-Bausteinen bestehen und auch Heteroatome enthalten können. Besonders bevorzugte Beispiele sind Styrol, 4-Vinylpyridin, *N*-Vinylphthalimid, Methylstyrol und 3,4-Dimethoxystyrol, wobei diese Aufzählung nicht abschließend ist.

Besonders bevorzugte Beispiele für die Komponente (a3) sind Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, *N*-Methylolmethacrylamid, *N*-(Butoxymethyl)methacrylamid, *N*-Methylolacrylamid, *N*-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dimethylacrylsäure, 4-Vinylbenzoesäure, wobei diese Aufzählung nicht abschließend ist.

Monomere der Komponente (a3) können vorteilhaft auch derart gewählt werden, dass sie funktionelle Gruppen enthalten, die eine nachfolgende strahlenchemische Vernetzung (beispielsweise durch Elektronenstrahlen oder UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, *N-tert*-Butylacrylamid, Allylacrylat, wobei diese Aufzählung nicht abschließend ist.

Zur Polymerisation werden die Monomere dermaßen gewählt, dass die resultierenden Polymere als thermisch vernetzbare Polyacrylatmassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York, 1989) besitzen.

Als Haftklebemasse kann auch eine Haftklebemasse eingesetzt werden, die neben Polyacrylat auch Synthesekautschuk enthält. So offenbart beispielsweise die DE 10 2013 215 297 A1 eine Haftklebemasse auf Basis von Polyacrylat und Synthesekautschuk sowie eines bestimmten Klebharzes mit guter Klebleistung in einem Temperaturbereich von -30 °C bis 70 °C und insbesondere auch bei Raumtemperatur. Die Haftklebemasse enthält (a) 40 - 70 Gew.-%, bezogen auf das Gesamtgewicht der Haftklebemasse, mindestens eines Poly(meth)acrylats; (b) 15 - 50 Gew.-%, bezogen auf das Gesamtgewicht der Haftklebemasse, mindestens eines Synthesekautschuks; und (c) mindestens ein mit dem/den Poly(meth)acrylat(en) verträgliches Klebharz.

Unter einem "Poly(meth)acrylat" wird ein Polymer verstanden, dessen Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Erfindungsgemäß ist das Poly(meth)acrylat bzw. sind Poly(meth)acrylate zu 40 bis 70 Gew.-%, bezogen auf das Gesamtgewicht der Haftklebemasse, enthalten. Bevorzugt enthält die erfindungsgemäße Haftklebemasse 45 bis 60 Gew.-%, bezogen auf das Gesamtgewicht der Haftklebemasse, mindestens eines Poly(meth)acrylats.

Die Glasübergangstemperatur der erfindungsgemäß einsetzbaren Poly(meth)acrylate beträgt bevorzugt < 0 °C, stärker bevorzugt zwischen -20 und -50 °C.

Vorzugsweise sind die Poly(meth)acrylate der erfindungsgemäßen Haftklebemasse erhältlich durch zumindest anteiliges Einpolymerisieren von funktionellen, bevorzugt mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen pro Molekül beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomere.

Die Eigenschaften des betreffenden Poly(meth)acrylats lassen sich insbesondere über eine Variation der Glasübergangstemperatur des Polymers durch unterschiedliche Gewichtsanteile der einzelnen Monomere beeinflussen. Das beziehungsweise die Poly(meth)acrylat(e) der Erfindung können vorzugsweise auf die folgende Monomerzusammensetzung zurückgeführt werden:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,

b) olefinisch ungesättigte Monomere mit funktionellen Gruppen der für eine Reaktivität mit bevorzugt Epoxidgruppen bereits definierten Art,

c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) werden bevorzugt derart gewählt, dass das Polymerisationsprodukt eine Glasübergangstemperatur von < 0 °C, stärker bevorzugt zwischen -20 und -50 °C aufweist. Es ist besonders vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat,Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:

Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat,

2-Phenoxyethylmethacrylat, Butyldiglykolmethacrylat, Ethylenglycolacrylat, Ethylenglycol-monomethylacrylat, Methoxy Polyethylenglykolmethacrylat 350, Methoxy Polyethylenglykolmethacrylat 500, Propylenglycolmonomethacrylat, Butoxydiethylen-glykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoro-isopropylacrylat, 1,1,1,3,3,3-Hexafluoroisopropylmethacrylat, 2,2,3,3,3-Pentafluoropropyl-methacrylat, 2,2,3,4,4,4-Hexafluorobutylmethacrylat, 2,2,3,3,4,4,4-Heptafluorobutyl-acrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropyl-methacrylamid, N-(1-Methylundecyl)acrylamid, N-(n-Butoxymethyl)acrylamid, N-(Butoxymethyl)methacrylamid, N-(Ethoxymethyl)-acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, NMethylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (gewichtsmittleres Molekulargewicht $M_w$ von 4000 bis 13000 g/mol), Poly(methylmethacrylat)ethylmethacrylat ($M_w$ von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert- Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt. Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2- methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel für die Herstellung der Poly(meth)acrylate kommen Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Es kann vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Angaben des gewichtsmittleren Molekulargewichtes $M_W$, des zahlenmittleren Molekulargewichts $M_n$ und der Polydisperistät PD in dieser Schrift beziehen sich auf die Bestimmung per Gelpermeationschromatographie (GPC). Die Bestimmung erfolgt an 100 μl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 μm, $10^3$ Å, 8,0 mm * 50 mm (Angaben hier und im Folgenden in der Reihenfolge: Typ, Partikelgrösse, Porosität,

Innendurchmesser * Länge; 1 Å = $10^{-10}$ m) verwendet. Zur Auftrennung wird eine Kombination der Säulen des Typs PSS-SDV, 5 μm, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Die Polyacrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats. Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist.

Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Auch über N-Oxyle lassen sich entsprechende Polyacrylate herstellen. Ferner lässt sich in vorteilhafter Weise die Atom Transfer Radical Polymerization (ATRP) zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag oder Au-Komplexe eingesetzt werden.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die Poly(meth)acrylate der erfindungsgemäßen Haftklebemasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanaten, insbesondere aliphatischen oder mit Aminen deaktivierten trimerisierten Isocyanaten, als Vernetzer.

Geeignete Isocyanate sind insbesondere trimerisierte Derivate von MDI [4,4-Methylendi(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Bevorzugt sind die Poly(meth)acrylate der erfindungsgemäßen Haftklebemasse mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4- hydroxyphenyl)-phenylmethan, Bis-(4-hydroxyphenyl)-phenylmethan, Bis-(4- hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'- Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanilin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. dessen Derivaten und anderen) erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Besonders bevorzugt für die Poly(meth)acrylate als zu vernetzende Polymere ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden erfindungsgemäß besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielsweise Triethylamin, Triethylendiamin, Benzyldimethylamin, Dimethylamino-methylphenol, 2,4,6-Tris-(N,Ndimethylaminomethyl)- phenol, N,N'-Bis(3-(dimethyl-amino)propyl)-harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)-ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2- (Dibutylamino)-ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethyl-aminoethoxy)ethanol, N,N,N'-Trimethyl-N'-hydroxyethylbisaminoethylether, N,N,N'-Trimethylaminoethylethanolamin und/oder N,N,N'-Trimethylaminopropyl-ethanolamin eingesetzt werden. Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Die erfindungsgemäße Haftklebemasse enthält ferner mindestens einen Synthesekautschuk. Erfindungsgemäß ist der Synthesekautschuk bzw. sind Synthesekautschuke in der Haftklebemasse zu 15 bis 50 Gew.-%, bezogen auf das Gesamtgewicht der Haftklebemasse, enthalten. Bevorzugt enthält die Haftklebemasse 20 bis 40 Gew.-%, bezogen auf das Gesamtgewicht der Haftklebemasse, mindestens eines Synthesekautschuks.

Bevorzugt ist mindestens ein Synthesekautschuk der erfindungsgemäßen Haftklebemasse ein Blockcopolymer mit einem Aufbau A-B, A-B-A, $(A-B)_n$, $(A-B)_nX$ oder $(A-B-A)_nX$,
worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq 2$ stehen.

Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Der Block A ist generell ein glasartiger Block mit einer bevorzugten Glasübergangstemperatur ($T_g$), die oberhalb der Raumtemperatur liegt. Besonders bevorzugt liegt die $T_g$ des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 20 bis 33 Gew.-%. Vinylaromaten zum Aufbau des Blocks A umfassen bevorzugt Styrol, $\alpha$- Methylstyrol und/oder andere Styrol-Derivate. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten $T_g$ von kleiner als Raumtemperatur auf. Die $T_g$ des Weichblocks ist besonders bevorzugt kleiner als 0 °C, insbesondere kleiner als -10 °C, beispielsweise kleiner als -40 °C und ganz besonders bevorzugt kleiner als - 60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die erfindungsgemäße Haftklebemasse enthält darüber hinaus mindestens einen mit dem/den Poly(meth)acrylaten verträglichen Tackifier, der auch als Klebkraftverstärker oder Klebharz bezeichnet werden kann. Unter einem "Tackifier" wird entsprechend dem allgemeinem Fachmannverständnis ein oligomeres oder polymeres Harz verstanden, das die Autohäsion (den Tack, die Eigenklebrigkeit) der Haftklebemasse im Vergleich zu der keinen Tackifier enthaltenden, ansonsten aber identischen Haftklebemasse erhöht.

Unter einem "mit dem/den Poly(meth)acrylaten verträglichen Tackifier" wird ein Tackifier verstanden, der die Glasübergangstemperatur des nach gründlichem Mischen von Poly(meth)acrylat und Tackifier erhaltenen Systems im Vergleich zum reinen Poly(meth)acrylat verändert, wobei auch der Mischung aus Poly(meth)acrylat und Tackifier nur eine Tg zugeordnet werden kann. Ein nicht mit dem/den Poly(meth)acrylat(en) verträglicher Tackifier würde in dem nach gründlichem Mischen von Poly(meth)acrylat und Tackifier erhaltenen System zu zwei Tg führen, von denen eine dem Poly(meth)acrylat und die andere den Harz-Domänen zuzuordnen wäre. Die Bestimmung der Tg erfolgt in diesem Zusammenhang kalorimetrisch mittels DSC (differential scanning calorimetry).

Die Poly(meth)acrylat-verträglichen Harze der erfindungsgemäßen Zusammensetzung weisen bevorzugt einen DACP-Wert von weniger als 0 °C, sehr bevorzugt von höchstens -20 °C, und/oder bevorzugt einen MMAP-Wert von weniger als 40 °C, sehr bevorzugt von höchstens 20 °C, auf. Zur Bestimmung von DACP- und MMAP-Werten wird auf C. Donker, PSTC Annual Technical Seminar, Proceedings, S. 149-164, Mai 2001 verwiesen.

Erfindungsgemäß bevorzugt ist der mit den Poly(meth)acrylaten verträgliche Tackifier ein Terpenphenolharz oder ein Kolophoniumderivat, besonders bevorzugt ein Terpenphenolharz. Die erfindungsgemäße Haftklebemasse kann auch Mischungen mehrerer Tackifier enthalten. Unter den Kolophoniumderivaten sind Kolophoniumester bevorzugt.

Die erfindungsgemäße Haftklebemasse enthält bevorzugt 7 bis 25 Gew.-%, bezogen auf das Gesamtgewicht der Haftklebemasse, mindestens eines mit den Poly(meth)acrylaten verträglichen Tackifiers. Besonders bevorzugt ist der mit den Poly(meth)acrylaten verträgliche Tackifier bzw. sind mit den Poly(meth)acrylaten verträgliche Tackifier zu

12 bis 20 Gew.-%, bezogen auf das Gesamtgewicht der Haftklebemasse, enthalten.

Bevorzugt ist/sind der bzw. die mit den Poly(meth)acrylaten verträgliche(n) Tackifier der erfindungsgemäßen Haftklebemasse auch mit dem Synthesekautschuk, insbesondere mit dessen Weichblock B, verträglich oder zumindest teilverträglich, wobei die vorstehende Definition des Begriffs "verträglich" entsprechend gilt. Polymer/Harz-Verträglichkeit ist u. a. von der Molmasse der Polymere bzw. Harze abhängig. Die Verträglichkeit ist besser, wenn die Molmasse(n) niedriger liegen. Für ein gegebenes Polymer kann es möglich sein, dass die niedermolekularen Bestandteile der Harzmolmassenverteilung mit dem Polymer verträglich sind, die höhermolekularen aber nicht. Dies ist ein Beispiel für Teilverträglichkeit.

Das Gewichtsverhältnis von Poly(meth)acrylaten zu Synthesekautschuken in der erfindungsgemäßen Haftklebemasse beträgt bevorzugt von 1:1 bis 3:1, insbesondere von 1,8:1 bis 2,2:1.

Das Gewichtsverhältnis von mit den Poly(meth)acrylaten verträglichen Tackifieren zu Synthesekautschuken in der erfindungsgemäßen Haftklebemasse beträgt bevorzugt maximal 2:1, insbesondere maximal 1:1. Mindestens beträgt dieses Gewichtsverhältnis bevorzugt 1:4.

Besonders bevorzugt enthält die erfindungsgemäße Haftklebemasse

a) 50 - 60 Gew.-%, bezogen auf das Gesamtgewicht der Haftklebemasse, mindestens eines Poly(meth)acrylats;
b) 20 - 40 Gew.-%, bezogen auf das Gesamtgewicht der Haftklebemasse, mindestens eines Synthesekautschuks; und
c) 7 - 25 Gew.-% mindestens eines mit dem/den Poly(meth)acrylat(en) verträglichen Tackifiers.

Bevorzugt liegt der Synthesekautschuk in der erfindungsgemäßen Haftklebemasse im Poly(meth)acrylat dispergiert vor. Poly(meth)acrylat und Synthesekautschuk sind dementsprechend bevorzugt für sich jeweils homogene Phasen. Die in der Haftklebemasse enthaltenen Poly(meth)acrylate und Synthesekautschuke sind vorzugsweise so gewählt, dass sie bei 23 °C nicht bis zur Homogenität miteinander mischbar sind. Die erfindungsgemäße Haftklebemasse liegt somit zumindest mikroskopisch und zumindest bei Raumtemperatur bevorzugt in mindestens zweiphasiger Morphologie vor. Besonders bevorzugt sind Poly(meth)acrylat(e) und Synthesekautschuk(e) in einem Temperaturbereich von 0 °C bis 50 °C, insbesondere von -30 °C bis 80 °C nicht homogen miteinander mischbar, so dass die Haftklebemasse in diesen Temperaturbereichen zumindest mikroskopisch mindestens zweiphasig vorliegt.

Komponenten sind im Sinne dieser Schrift als dann "nicht homogen miteinander mischbar" definiert, wenn sich auch nach innigem Vermischen die Ausbildung zumindest zweier stabiler Phasen physikalisch und/oder chemisch zumindest mikroskopisch nachweisen lässt, wobei die eine Phase reich an der einen Komponente und die zweite Phase reich an der anderen Komponente ist. Ein Vorliegen vernachlässigbar geringer Mengen der einen Komponente in der anderen, das einer Ausbildung der Mehrphasigkeit nicht entgegensteht, wird dabei als unbeachtlich angesehen. So können in der Poly(meth)acrylatphase geringe Mengen an Synthesekautschuk und/oder in der Synthesekautschukphase geringe Mengen an Poly(meth)acrylat-Komponente vorliegen, sofern es sich nicht um wesentliche Mengen handelt, welche die Phasenseparation beeinflussen.

Die Phasentrennung kann insbesondere derart realisiert sein, dass diskrete Bereiche ("Domänen"), die reich an Synthesekautschuk sind - also im Wesentlichen aus Synthesekautschuk gebildet sind -, in einer kontinuierlichen Matrix, die reich an Poly(meth)acrylat ist - also im Wesentlichen aus Poly(meth)acrylat gebildet ist -, vorliegen.

Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der dynamischen Differenzkalorimetrie (DDK, DSC) aufweisen. Phasentrennung liegt erfindungsgemäß dann vor, wenn sie sich durch mindestens eine der Analysenmethoden eindeutig zeigen lässt.

Innerhalb der Synthesekautschuk-reichen Domänen kann als Feinstruktur zudem zusätzliche Mehrphasigkeit vorliegen, wobei die A-Blöcke eine Phase und die B-Blöcke eine zweite Phase bilden.

Die erfindungsgemäße Haftklebemasse kann über die bisher aufgeführten Bestandteile hinaus ein oder mehrere Kohlenwasserstoffharz(e) enthalten, die nicht mit dem Poly(meth)acrylat verträglich sind. Derartige Kohlenwasserstoffharze, die ebenfalls Tackifier sind, umfassen bevorzugt hydrierte Polymerisate des Dicyclopentadiens; nicht, partiell, selektiv oder vollständig hydrierte Kohlenwasserstoffharze auf Basis von C5-, C5/C9- oder C9-Monomerströmen und Polyterpenharze auf Basis von $\alpha$-Pinen und/oder von $\beta$-Pinen und/oder von $\delta$-Limonen. Die Kohlenwasserstoffharze weisen bevorzugt einen DACP-Wert von mindestens 0 °C, sehr bevorzugt von mindestens 20 °C, und/oder bevorzugt einen MMAP-Wert von mindestens 40 °C, sehr bevorzugt von mindestens 60 °C, auf.

Die vorgenannten Kohlenwasserstoffharze können sowohl einzeln als auch im Gemisch in der Haftklebemasse enthalten sein. Besonders bevorzugte Kohlenwasserstoffharze sind Polyterpenharze auf Basis von $\alpha$-Pinen und/oder von $\beta$-Pinen und/oder von $\delta$-Limonen.

Bevorzugt ist die erfindungsgemäße Haftklebemasse geschäumt. Die Schäumung kann mittels beliebiger chemischer und/oder physikalischer Methoden erfolgen. Bevorzugt wird eine geschäumte erfindungsgemäße Haftklebemasse jedoch durch das Einbringen und nachfolgende Expandieren von Mikroballons erhalten. Bezüglich der Mikroballons gelten die vorstehenden Ausführungen.

Die Dichte einer geschäumten erfindungsgemäßen Haftklebemasse beträgt bevorzugt 200 bis 1000 kg/$m^3$, stärker bevorzugt 300 bis 900 kg/$m^3$, insbesondere 400 bis 800 kg/$m^3$.

Je nach Anwendungsgebiet und gewünschten Eigenschaften der erfindungsgemäßen Haftklebemasse können dieser weitere Komponenten und/oder Additive zugesetzt sein, und zwar jeweils allein oder in Kombination mit einem oder mehreren anderen Additiven oder Komponenten.

So kann die erfindungsgemäße Haftklebemasse beispielsweise Pulver- und granulatförmige, insbesondere auch abrasive und verstärkende, Füllstoffe, Farbstoffe und Pigmente wie z. B. Kreiden (CaCO3), Titandioxid, Zinkoxide und/oder Ruße, enthalten. Bevorzugt enthält die Haftklebemasse eine oder mehrere Kreideform(en) als Füllstoff, besonders bevorzugt Mikrosöhl-Kreide (Fa. Söhlde). Bei bevorzugten Anteilen bis zu 20 Gew.-% verändern sich die klebtechnischen Eigenschaften (Scherfestigkeit bei Raumtemperatur, Sofortklebkraft auf Stahl und PE) durch den Füllstoffzusatz praktisch nicht. Darüber hinaus können verschiedene organische Füllstoffe enthalten sein. Geeignete Additive für die erfindungsgemäße Haftklebemasse sind außerdem - unabhängig gewählt von anderen Additiven - nicht expandierbare Polymerhohlkugeln, Polymervollkugeln, Glashohlkugeln, Glasvollkugeln, keramische Hohlkugeln, keramische Vollkugeln und/oder Kohlenstoffvollkugeln ("Carbon Micro Balloons"). Weiterhin kann die erfindungsgemäße Haftklebemasse schwerentflammbare Füllstoffe, beispielsweise Ammoniumpolyphosphat; elektrisch leitfähige Füllstoffe, beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive, beispielsweise Eisen-(III)-Oxide; organische, nachwachsende Rohstoffe wie beispielsweise Holzmehl, organische und/oder anorganische Nanopartikel, Fasern; Compoundierungsmittel, Alterungsschutzmittel, Lichtschutzmittel und/oder Ozonschutzmittel enthalten.

Optional können Weichmacher enthalten sein. Als Weichmacher können z.B. (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Ein Verfahren zur Herstellung einer erfindungsgemäßen Haftklebemasse kann zunächst eine Aufkonzentration der aus der Polymerherstellung resultierenden Polyacrylat-Lösung oder -Dispersion umfassen. Die Aufkonzentration des Polymerisats kann in Abwesenheit von Vernetzer- und Beschleunigersubstanzen geschehen. Es ist aber auch möglich, maximal eine dieser Substanzen dem Polymerisat bereits vor der Aufkonzentration zuzusetzen, so dass die Aufkonzentration dann in Gegenwart dieser Substanz(en) erfolgt.

Der Synthesekautschuk kann zusammen mit dem Poly(meth)acrylat-verträglichen Harz über einen Feststoffdosierer in einen Compounder zum Beispiel eines Planetwalzenextruders gegeben werden. Über einen Sidefeeder kann das aufkonzentrierte und ggf. schon aufgeschmolzene Poly(meth)acrylat in den Compounder eingebracht werden. In besonderen Ausführungen des Verfahrens ist es auch möglich, dass Aufkonzentration und Compoundierung im selben Reaktor stattfinden. Die Poly(meth)acrylat-verträglichen Harze können auch über eine Harzschmelze und einen weiteren Sidefeeder an anderer Verfahrensposition, z. B. nach Eingabe von Synthesekautschuk und Poly(meth)acrylat, zugeführt werden.

Weitere Additive und/oder Weichmacher können ebenfalls als Feststoffe oder Schmelze oder auch als Batch in Kombination mit einer anderen Formulierungskomponente zugeführt werden. Insbesondere kann als Compounder ein Extruder eingesetzt werden. Die Polymere liegen im Compounder bevorzugt in der Schmelze vor, entweder weil sie bereits im Schmelzezustand eingegeben werden oder indem sie im Compounder bis zur Schmelze erhitzt werden. Vorteilhafterweise werden die Polymerisate im Compounder durch Beheizung in der Schmelze gehalten.

Sofern Beschleunigersubstanzen für die Vernetzung des Poly(meth)acrylats eingesetzt werden, werden diese den Polymerisaten bevorzugt erst kurz vor der Weiterverarbeitung, insbesondere einer Beschichtung oder anderweitigen Ausformung, zugesetzt. Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden.

Die Vernetzer, beispielsweise Epoxide, und die Beschleuniger können auch beide kurz vor der Weiterverarbeitung der Zusammensetzung zugesetzt werden, also vorteilhaft in der Phase, wie sie vorstehend für die Beschleuniger dargestellt ist. Hierzu ist es vorteilhaft, wenn Vernetzer und Beschleuniger an ein- und derselben Stelle gleichzeitig in den Prozess eingebracht werden, gegebenenfalls als Epoxid-Beschleuniger-Abmischung. Grundsätzlich ist es auch möglich, die Zugabezeitpunkte bzw. Zugabestellen für Vernetzer und Beschleuniger in den oben dargestellten Ausführungen zu vertauschen, so dass der Beschleuniger vor den Vernetzersubstanzen zugesetzt werden kann.

Nach der Compoundierung der Masse kann ihre Weiterverarbeitung, insbesondere die Beschichtung auf einen permanenten oder auf einen temporären Träger, erfolgen. Ein permanenter Träger bleibt bei der Anwendung mit der Klebemassenschicht verbunden, während der temporäre Träger in dem weiteren Verarbeitungsprozess, zum Beispiel der Konfektionierung des Klebebandes, oder bei der Anwendung von der Klebemassenschicht entfernt wird.

Die Beschichtung der Selbstklebemassen kann mit dem Fachmann bekannten Hotmelt- Beschichtungsdüsen oder bevorzugt mit Walzenauftragswerken, auch Beschichtungs- kalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen. Bevorzugt sind alle Walzen des Kalanders, die mit der Haftklebemasse in Berührung kommen, anti-adhäsiv ausgerüstet. Als anti-adhäsive Walzenoberfläche wird bevorzugt ein Stahl-Keramik-Silikon-Verbundwerkstoff eingesetzt. Derartige Walzenoberflächen sind gegen thermische und mechanische Belastungen resistent.

Es hat sich als besonders vorteilhaft herausgestellt, wenn Walzenoberflächen eingesetzt werden, die eine Oberflächenstruktur aufweisen, insbesondere in der Art, dass die Fläche keinen vollständigen Kontakt zur zu verarbeitenden Masseschicht herstellt, sondern dass die Kontaktfläche - verglichen mit einer glatten Walze - geringer ist. Besonders günstig sind strukturierte Walzen wie Metall-Rasterwalzen, beispielsweise Stahlrasterwalzen.

Ein weiterer Gegenstand der Erfindung ist ein Klebeband, das mindestens eine Schicht einer solchen Haftklebemasse enthält, beispielsweise ein Transfertape. Diese eignen sich besonders für die Ausbildung hoher Schichtdicken.

Die Herstellung eines beispielhaft einsetzbaren Polyacrylat-Basispolymers ist wie folgt:
Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben, und nach 4 h wurde mit 10 kg Aceton/Isopropanol-Gemisch (94:6) verdünnt. Nach 5 h sowie nach 7 h wurde jeweils mit 150 g Bis-(4-tert-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde getrocknet. Das resultierende Polyacrylat hatte einen K-Wert von 58,9 (die Bestimmung erfolgte wie vorstehend beschrieben), ein mittleres Molekulargewicht von $M_w$ = 748.000 g/mol, eine Polydispersität von D ($M_w/M_n$) = 8,9 und eine Glasübergangstemperatur von $T_g$ = - 35,2 °C.

Unter Verwendung dieses Polyacrylat-Basispolymers kann ein erfindungsgemäßes Klebeband beispielsweise wie folgt hergestellt werden (siehe Beispiel 1 aus DE 10 2013 215 297 A1, das Klebeband wird im Folgenden als K1 bezeichnet):
In einem Planetwalzenextruder wurde über einen Feststoffdosierer der Synthesekautschuk Kraton D1118 (Styrol-Butadien-Styrol-Triblockcopolymer der Firma Kraton Polymers mit 78 Gew.-% Diblock, Blockpolystyrolgehalt: 33 Gew.-%, Anteil an 1,2-verknüpftem konjugiertem Dien im Butadienblock: 10 Gew.-%) als Granulat aufgeschmolzen. Es folgte die Zugabe einer Mikroballonpaste (50 % Expancel 051DU40 in Ethomeen C25, d.h. unexpandierte Mikroballons in einem tertiären Aminethoxylat, der Firma Akzo Nobel). Über einen Sidefeeder wurde das Polyacrylat-Basispolymer zugeführt, das in einem Einschneckenextruder vorgeschmolzen wurde, und ein Terpenphenolharz (Dertophen DT1 05 der Firma DRT) zudosiert. Der Mischung wurden Vernetzer- (Polypox R16 15 % in Reofos RDP) und Beschleuniger- (15 % Epikure 925 in Reofos RDP) Lösung zugegeben. Bei Polypox R16 handelt es sich um einen hitzeinduzierten Epoxidvernetzer (Pentaerythritolpolyglycidylether, Hersteller: BASF), bei Epikure 925 handelt es sich um Triethylentetramin der Firma Hexion. Reofos RDP ist ein hochmolekularer Phosphatester, der als Flammschutzmittel wirkt (Hersteller: Great Lakes). Die Schmelze wurde durchmischt und über einen Zweiwalzenkalander zwischen zwei Trennfolien (silikonisierte PET-Folie) beschichtet. Es resultierte ein einschichtiges Klebeband mit einer Schichtdicke von beispielsweise 1000 $\mu$m und einer Dichte von 550 kg/$m^3$. Die Zusammensetzung lag bei 48 % Polyacrylat, 25 % Kraton D1118, 18 % Dertophen DT105, 4 % Vernetzer-/Beschleuniger-Lösung (Vernetzer:Beschleuniger = 1:1), 5 % Mikroballonpaste (Angaben in Gew.-%). In anderen Beispielen wird anstelle von Kraton D1118 das Kraton D1102 ebenfalls der Firma Kraton Polymers eingesetzt, d.h. ein lineares Triblockcopolymer auf Basis von Styrol und Butadien, mit einem Polystyrolgehalt von 28 Gew.-%. Außerdem kann neben Dertophen DT105 auch Piccolyte A115 eingesetzt werden, d.h. ein Polyterpenharz des Herstellers Pinova.

Die vorliegende Erfindung ist, wie oben ausgeführt, unabhängig von zu beklebender Oberfläche, Klebmasse und Liner, anwendbar, solange das erfindungsgemäße Abzugskraftverhältnis eingehalten wird. Insbesondere ist die vorliegende Erfindung auch für niederenergetische Oberflächen, d.h. unpolare Oberflächen (LSE (low surface energy)-Oberflächen) geeignet. Bei solchen Oberflächen versagen herkömmliche Applikationsverfahren oftmals und können ein zuverlässiges Applizieren der Klebestanzteile nicht gewährleisten.

Die vorliegende Erfindung hingegen ermöglicht auch ein zuverlässiges Applizieren auf niederenergetischen Oberflächen. Besonders geeignet ist die vorliegende Erfindung somit zur Verklebung von Oberflächen mit einer Oberflächenenergie von 50 mN/m oder weniger, vorzugsweise weniger als 40 mN/m, und insbesondere weniger als 35 mN/m.

Insbesondere bei Anwendungen im Automobilbereich werden immer häufiger Kunststoffe anstelle von Metallen eingesetzt. Diese besitzen in der Regel eine geringe Oberflächenenergie, die das Verkleben auf diesen Untergründen häufig erschwert. Hier ist das erfindungsgemäße Verfahren besonders hilfreich. Zu den mit dem erfindungsgemäßen Verfahren besonders gut verklebbaren unpolaren Oberflächen zählen beispielsweise solche auf Basis von fluorhaltigen

Polymeren wie zum Beispiel Teflon, siliziumorganischen Polymeren, Polyolefinen wie zum Beispiel Polyethylen, Polypropylen, EPDM oder einem Polypropylen-EPDM-Composite, EthylenVinylacetat-Copolymeren, Polyvinylaromaten wie Polystyrol oder Copolymere auf Basis von Styrol (z.B. Styrol-Butadien-Blockcopolymere, Acrylnitril-Butadien-StyrolCopolymere), Polyvinylacetat, Polyacrylaten wie Polymethylmethacrylat, Polycarbonaten, Polyurethanen, Polyamiden, Polyester wie Polyethylenterephthalat, Celluloseacetat, Ethylcellulose oder auf Basis von Polymeren, welche Segmente der vorgenannten Polymere enthalten oder solche auf Basis eines Gemisches vorgenannter Polymere, gegebenenfalls mit weiteren Polymeren. Mit der Formulierung "auf Basis des Polymers" ist in diesem Zusammenhang gemeint, dass überwiegend das besagte Polymer die Funktion des Oberflächenmaterials übernimmt. Typischerweise ist das besagte Polymer im Oberflächenmaterial als einziges Polymer vorgesehen oder jedenfalls aber zu mindestens 50 Gew.-% bezogen auf den Gesamtanteil aller Polymerkomponenten. Harze gelten in diesem Zusammenhang nicht als Polymere. Das erfindungsgemäße Verfahren eignet sich jedoch auch zum Verkleben von anderen Substraten als Polymermaterial, wie zum Beispiel Glas oder Keramikmaterial, Metall wie zum Beispiel Edelstahl, Metalloxid oder Kombinationen davon. Die Materialien können dabei in reiner Form vorliegen oder mit anderen Materialien geblendet oder gefüllt sein. Ferner kann das Material Recyclingmaterial sein oder ein funktioneller Stoff z.B. zur Erhöhung/Erniedrigung von Leitfähigkeiten oder der Haptik.

Das erfindungsgemäße Verfahren eignet sich daher für unterschiedlichste industrielle Anwendungen, vorzugsweise wird er für Innenanwendungen eingesetzt, und dabei insbesondere im Bau-, Automobil- oder Elektronikbereich.

Das Verfahren kann zum Beispiel bei Verklebungen im Auto-Innenbereich eingesetzt werden, und dabei insbesondere in Türen, wie Innentüren, Cockpits, Mittelkonsolen, Sitzen und anderen Teilen, deren Grundgerüst oder Einzelteile miteinander verbunden werden. Er kann außerdem beispielsweise bei der Verklebung von Automobil-Karosserieseiten-Formteilen, Rückspiegeln, Außenverkleidungsteilen, Wetterleisten, Straßenschildern, Handelsschildern, Konstruktionen, Schaltschränken, Schalenformen, Maschinenteilen, Anschlussdosen oder Backsheet-Lösungen für Photovoltaik-Module (d.h. in der Solarzellenindustrie) eingesetzt werden. Ferner kann es zum Verbinden mit Automobil-Klarlackoberflächen verwendet werden, wie insbesondere Klarlacke für Fahrzeuge wie ein Auto. Das Substrat, auf das das Stanzteil aufgebracht werden kann, wird in Abhängigkeit von der jeweiligen Anwendung ausgewählt. Beispielsweise kann das Stanzteil auf Folienprodukte (z.B. dekorative Grafiken und reflektierende Produkte), Etikettenmaterial und Bandträger aufgetragen werden. Ferner kann er direkt auf andere Substrate, wie z. B. eine Metallplatte (z. B. eine Fahrzeugtafel) oder ein Glasfenster aufgebracht werden, so dass noch ein anderes Substrat oder Objekt an der Platte oder dem Fenster angebracht werden kann.

Das erfindungsgemäße Verfahren bewirkt sowohl beim manuellen Applizieren von Stanzteilen eine relevante Verbesserung wie auch insbesondere beim automatisierten Applizieren, z.B. mittels eines gesteuerten Roboterarms mit Applikator.

Wie oben ausgeführt, bringt das erfindungsgemäße Verfahren gerade beim automatisierten Aufbringen große Vorteile mit sich, weil hier dem Spendeerfolg eine besonders große Bedeutung zukommt. Ein zuverlässiges Kleben der Stanzlinge auf der Oberfläche ist besonders wichtig, da anders als beim manuellen Aufbringen, wo der Anwender sofort sieht, ob das Stanzteil zufriedenstellend aufgeklebt wurde, keine unmittelbare Kontrolle des Spendeerfolgs durchgeführt wird oder nur mit aufwendiger maschineller Kontrolle und Nacharbeit gewährleistet werden kann.

Insbesondere bei großen zu verklebenden Teilen ist dies wichtig, da auf solchen Teilen eine große Anzahl von Stanzteilen appliziert werden. Da jedes einzelne dieser Stanzteile fehlerfrei appliziert sein muss, wenn eine fehlerfreie Verklebung des zu verklebenden Teils gewährleistet werden soll, potenziert sich die Anzahl des Produktionsausschusses mit der Anzahl der zu applizierenden Stanzteile. Eine zuverlässige Applikation ist daher essenziell. Somit ist das vorliegende Verfahren besonders geeignet zur Verringerung der Fehlerhäufigkeit bei der Verklebung von Kunststoffteilen, insbesondere in der Automobilindustrie.

Wichtig für das automatische Applizieren von Stanzteilen ist auch die Applikationsgeschwindigkeit. Diese hängt von der Distanz der zu applizierenden Stanzteile ab. Da Stanzteile der vorliegenden Erfindung geeignet sind, Ultraschallschweißpunkte auf Kunststoffen zu ersetzen, sind typische Entfernungen von zwei Applikationspunkten zwischen 50 und 200 mm, insbesondere zwischen 80 und 100 mm, zu erwarten. Die Applikationszeit pro Stanzteil beträgt dann typischerweise weniger als 5 Sekunden, vorzugsweise weniger als 2 Sekunden und insbesondere weniger als 1,5 Sekunden.

Um zu bestimmen, ob ein Klebeband als Stanzteilband, insbesondere für das automatisierte Applizieren von Stanzteilen geeignet ist, ist ein Prüfverfahren mit definiertem Ablauf erforderlich, da nur so eine Vergleichbarkeit und Wiederholbarkeit gegeben ist.

Die vorliegende Erfindung stellt daher auch ein Testverfahren zur Verfügung zur Prüfung der Eignung eines Klebebandes als Stanzteilband, wobei das Stanzteilband aus auf einer Linerschicht aufgebrachten Stanzteilen gebildet ist, die mindestens eine Klebmasseschicht umfassen, für das Aufbringen der Stanzteile auf einer Oberfläche eines Substrats mittels eines Applikators. Dabei umfasst das Verfahren erfindungsgemäß die folgenden Schritte:

a) Aufbringen eines Stanzteils auf einem Stück Liner und Andrücken des Stanzteils auf dem Liner;

b) Führen des Liners um einen T-Block derart, dass das Stanzteil mittig auf dem T-Block liegt und mechanisches Befestigen des überstehenden Liners am vertikalen Teil des T-Blocks;
c) kontrolliertes Andrücken des T-Blocks mit dem Liner und dem auf diesem befindlichen Stanzteil mit definierter Kraft und für eine definierte Zeit auf eine Probe des Substrats;
d) Ermitteln des Erfolgs der Übertragung des Stanzteils vom Liner auf das Substrat.

Im erfindungsgemäßen Testverfahren sollen die Substrate mit der Reinheit eingesetzt werden, mit der sie in der realen Applikation üblicherweise verklebt werden. In der realen Applikation werden die zu verklebenden Bauteile (Substrate) häufig direkt ohne vorherige Reinigung verwendet (beispielsweise zur Entfernung von Öl). In diesem Fall werden im erfindungsgemäßen Testverfahren keine speziell gereinigten Substrate verwendet, sondern die Substrate werden lediglich grob von Verschmutzungen mittels eines Tuches befreit.
Als Andruckzeit ist dabei ein definierter, aber frei wählbarer Wert zwischen einer und zehn Sekunden bevorzugt. Zuverlässige Ergebnisse sind bereits für eine Andruckzeit von 1 sek erhältlich, aber auch eine Andruckzeit von 5 sek ist gut geeignet. Als Andruckgewicht ist insbesondere ein Gewicht im Bereich von 100 bis 1000 g geeignet, wie zum Beispiel 500 g.
Eine bevorzugte Klassifizierung des Übertragungserfolges kann dabei derart aussehen, dass der Erfolg der Übertragung klassifiziert wird in

- erfolgreich, wenn das Stanzteil direkt und sauber auf das Substrat übertragen worden ist; oder
- nicht erfolgreich, wenn das Stanzteil nicht direkt übertragen wird, insbesondere auf dem Liner verbleibt, nicht vollständig auf dem Substrat haftet oder ein Abheben des T-Blocks verhindert.

Wenn das Stanzteil nicht vollständig auf dem Substrat haftet, kann es z.B. zu einem sogenannten "Anlupfen" kommen, bei dem ein Teil des Stanzteils umklappt, weil es nicht auf dem Substrat haftet, so dass die Gesamtklebefläche kleiner wird, weil ein Teil des Stanzteils auf sich selbst liegt. Des Weiteren könnte dies zur Nichteinhaltung von Bauteiltolerenzen führen.
Die Ermittlung der jeweiligen Abzugskräfte vom Substrat bzw. vom Liner erfolgt vorzugsweise folgendermaßen:
Zunächst Ermittlung der Abzugskraft vom Substrat:

i) mechanisches Befestigen eines Probenstücks des Substrats von definierter Größe auf einer Prüfplatte;
ii) Andrücken eines Probenstücks des zu prüfenden Klebebandes von definierter Größe auf das Probenstück des Substrats mittels eines T-Blocks mit definierter Andruckkraft und definierter Andruckzeit;
iii) Messen der Abzugskraft des Klebebandes vom Substrat in z-Richtung in einem Zugprüfgerät.

Im Folgenden Ermittlung der Abzugskraft vom Liner:

iv) mechanisches Befestigen eines Probenstücks des Liners von definierter Größe auf einer Prüfplatte;
v) Andrücken eines Probenstücks des zu prüfenden Klebebandes von definierter Größe auf das Probenstück des Liners mittels eines T-Blocks mit definierter Andruckkraft und definierter Andruckzeit;
vi) Messen der Abzugskraft des Klebebandes vom Liner in z-Richtung in einem Zugprüfgerät.

Substrat bzw. Liner können zusätzlich zur mechanischen Befestigung auch noch mit einem Klebeband mit Silikonmasse vor dem Verrutschen gesichert werden.
Zweckmäßige Messgeschwindigkeiten im Zugprüfgerät betragen 100 bis 500 mm/min, besonders bevorzugt 200 bis 400 mm/min und insbesondere 300 mm/min. Der Abzugswinkel beträgt 90°.
Der Quotient der Abzugskraft in z-Richtung vom Liner und der Abzugskraft in z-Richtung vom Substrat ist dann das Abzugskraftverhältnis in z-Richtung.
Als Andruckzeit ist auch hier ein definierter, aber frei wählbarer Wert zwischen einer und zehn Sekunden bevorzugt. Zuverlässige Ergebnisse sind bereits für eine Andruckzeit von 1 sek erhältlich, aber auch eine Andruckzeit von 5 sek ist gut geeignet. Als Andruckgewicht ist ein Gewicht im Bereich von 100 bis 1000 g geeignet, insbesondere 500 g. Bevorzugte Randlängen des Probenstücks des Substrats bzw. des Liners betragen zwischen 5 und 50 mm, insbesondere zwischen 10 und 30 mm. Eine Probenstückgröße von 20 mm x 12 mm ist ganz besonders geeignet.
Anhand der nachfolgend beschriebenen Figur 1 wird eine besonders vorteilhafte Ausführung der Erfindung näher erläutert, ohne damit die Erfindung unnötig einschränken zu wollen.
Fig. 1 zeigt eine prinzipielle seitliche Ansicht eines Applikators 10 zur Verwendung in dem erfindungsgemäßen Verfahren. Der Applikator 10 ist dazu bestimmt, Stanzteile 2 von einem Stanzteilband 1 zu applizieren, das einen Liner 3 aufweist. Der Applikator 10 weist die Stanzteilrolle 7 auf, die sich im Uhrzeigersinn abwickelt. Auf der Stanzteilrolle 7 ist das Stanzteilband 1 aufgewickelt. Das Stanzteilband 1 weist den Liner 3 auf sowie aneinander anschließend angeordnete doppelseitig klebende Stanzteile 2. Das Stanzteilband wird mit der freiliegenden Klebmasseschicht zur Stanzteilrolle 7 aufgewickelt. Dabei ist die Klebkraft der Klebmasseschicht so bemessen, dass ein problemloses Abwickeln des Stanzteilbandes 1 von der Stanzteilrolle 7 durch ein Ziehen am freien Ende des Stanzteilbandes 1 möglich ist. Das freie Ende des Stanzteilbandes 1 ist um den Stempelkopf 8 des Stempels 9 herumgeführt. Das Stanzteilband 1 wird durch angetriebenes Drehen der Aufwickelrolle 13 an dem Liner 3 gezogen, und das Stanzteilband 1 wird so über der zu beklebenden Stelle 12 positioniert, dass ein Stanzteil 2 exakt am Trägerkopf 8 positioniert ist. Der Applikator 10 wird dann in einer Bewegung des (nicht eingezeichneten) Roboterarmes, an dem der Applikator 10 angeordnet ist, auf die Stelle 12 gedrückt, und durch die Klebkraft der Klebmasseschicht des Stanzteils 2 auf der Oberfläche 11 wird das Stanzteil 2 beim Fortbewegen des Applikators 10 weg von der Oberfläche von dem Stanzteilband 1 auf die Oberfläche 11 transferiert. Der verbleibende Liner 3 wird auf der Aufwickelrolle 13 aufgewickelt. Durch das Aufwickeln des Liners 3 erhält das Stanzteilband 1 seinen getakteten Vorschub und das nächste Stanzteil 2 wird auf dem Stempelkopf 8 positioniert.

Eine Steuerung des Applikators 10 funktioniert dabei wie folgt: Es ist ein erster Sensor vorgesehen, der auf den Stempelkopf 8 gerichtet ist und der das Vorhandensein des Stanzteils 2 auf dem Stempelkopf 8 registriert. Dieses kann z.B. durch eine farbliche Steuermarkierung erfolgen, es sind aber auch andere Erfassungsmöglichkeiten denkbar. Bei Vorhandensein des Stanzteils 2 gibt der erste Sensor ein Signal an die Steuerung ab, die ein Stoppsignal an einen Antrieb der Aufwickelrolle 13 abgibt. Die Drehbewegung der Aufwickelrolle 13 wird gestoppt. Der Applikator 10 und damit das Stanzteil 2 wird durch einen angeflanschten Roboterarm auf die zu beklebende Stelle 12 gedrückt. Daraufhin wird der Applikator 10 wieder hochgefahren und, durch die Steuerung koordiniert, die Aufwickelrolle 13 etwas gedreht, so dass das Stanzteilband 1 nicht lose über dem eingefahrenen Stempelkopf 8 hängt. Dadurch löst sich das Stanzteil 2 vom Liner ab.

Dadurch, dass das Stanzteil 2 mit seiner offenen Kleberseite auf die zu beklebende Oberfläche gerichtet ist, wird das sofortige Applizieren des Stanzteils 2 auf der Oberfläche 11 ermöglicht und wird begünstigt durch die Soforthaftung des Stanzteils 2 auf der Oberfläche 11.

## Experimenteller Teil

Die folgenden beispielhaften Experimente sollen die Erfindung näher erläutern, ohne durch die Wahl der angegebenen Beispiele die Erfindung unnötig einschränken zu wollen.

### *Prüfmethoden*

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

### *Dynamischer T-Block-Test*

Dieser Test dient der Ermittlung der Abzugskräfte in z-Richtung des jeweiligen Klebebandes vom Liner und vom Substrat. Das Substrat soll dabei mit der Reinheit eingesetzt werden, mit der es in der realen Applikation üblicherweise verklebt wird. Soweit nicht anders angegeben, erfolgt diese Bestimmung bei einem Prüfklima von 23 °C +/- 1 °C Temperatur und 50 % +/- 5 % rel. Luftfeuchte. Die Klebebandmuster, im Folgenden als Stanzteile bezeichnet, werden auf 20 mm x 12 mm zugeschnitten und auf die Unterseite des T-Blocks aus Stahl geklebt. Typischerweise wird für die Prüfung des T-Blocks zum Liner die vom Produktliner abgedeckte Seite des Stanzteils untersucht. Das Stanzteil ist dabei vom eigenen Produktliner gegen Verschmutzung geschützt. Typischerweise wird für die Prüfung des T-Blocks zum Substrat die offene, d.h. nicht vom Produktliner abgedeckte Seite des Stanzteils untersucht. Im letztgenannten Fall wird das Stanzteil bis zur Messung mit einem geeigneten Liner abgedeckt und somit ebenfalls gegen Verschmutzung geschützt. Auf einer Prüfplatte aus Stahl wird mechanisch der Liner bzw. das Substrat befestigt. Der Liner wird zusätzlich mittels eines Klebebandes mit Silikonmasse vor dem Verrutschen gesichert. Typischerweise wird die Innenseite des Liners geprüft, d.h. bei einem aufgewickelten Klebeband enthaltend den Liner wird typischerweise jene Seite des Liners geprüft, die zum Kern der Klebebandrolle zeigt. Zur Messung wird der Liner, der das Stanzteil schützt, abgezogen. Der T-Block mit dem Stanzteil wird für eine Sekunde mit einem Andruckgewicht von 500g auf den auf der Prüfplatte befestigten Liner bzw. das auf der Prüfplatte befestigte Substrat gedrückt. Der Probenkörper wird anschließend direkt in einem Zugprüfgerät der Firma Zwick abgezogen, und zwar mit einer Abzugsgeschwindigkeit von 300 mm/min. Dafür wird die Prüfplatte in einer Halteschiene eingespannt und der T-Block wird abgezogen. Der Abzugswinkel beträgt 90°. Die Messergebnisse sind in $N/cm^2$ angegeben und sind gemittelt aus drei Messungen.

Figur 2 zeigt beispielhaft eine vereinfachte Darstellung des dynamischen T-Block-Tests zur Ermittlung der Abzugskraft in z-Richtung eines Stanzteils 2 von einem Liner 3. Gezeigt wird dabei der Zeitpunkt des Abziehens des T-Blocks 5 mit dem Stanzteil 2 vom Liner 3.

Figur 3 zeigt den dynamischen T-Block-Test aus Figur 2 in den einzelnen Phasen. Das erste Bild von links zeigt den T-Block 5 mit dem Stanzteil 2 und separat davon den Liner 3. Das zweite Bild von links zeigt, wie der T-Block 5 mit dem Stanzteil 2 auf den Liner 3 gedrückt wird. Das dritte Bild von links zeigt, wie der T-Block 5 mit dem Stanzteil 2 zur Ermittlung der Abzugskraft vom Liner 3 abgezogen wird. Im rechten Bild ist der T-Block 5 mit dem Stanzteil 2 wieder vom Liner 3 getrennt. Analog zu dem T-Block-Test auf dem Liner 3 wird der T-Block-Test auf dem Substrat 6 durchgeführt (nicht gezeigt).

*Übertragungstest*

Dieser Test dient der Ermittlung des Spendeerfolgs, d.h. es wird ermittelt, ob das Klebebandmuster, im Folgenden als Stanzteil bezeichnet, ordnungsgemäß auf das Substrat übertragen wurde. Soweit nicht anders angegeben, erfolgt diese Bestimmung bei einem Prüfklima von 23 °C +/- 1 °C Temperatur und 50 % +/- 5 % rel. Luftfeuchte. Ein Stanzteil der Größe 20 mm x 12 mm wird auf dem Liner-Muster aufgebracht und mit einem Druck von 25 kPa für 1 s angedrückt. Typischerweise wird das Stanzteil mit seiner abgedeckten Seite auf die Innenseite des verwendeten Liners aufgebracht, dazu wird die offene Seite zunächst mit einem geeigneten Liner geschützt und der Produktliner der abgedeckten Seite, vor dem Aufbringen auf den für die Prüfung verwendeten Liner, abgezogen. Danach wird das Stanzteil für 24 h auf dem Liner liegen gelassen. Der Liner wird um einen T-Block geführt, so dass das Stanzteil mittig unter dem T-Block liegt. Der überstehende Liner wird mechanisch am vertikalen Teil des T-Blocks befestigt. Zur Messung wird der Liner, der das Stanzteil schützt, abgezogen. Mit einem kontrollierten Andruck wird der T-Block für eine Sekunde mit einem Andruck von 25 kPa auf das auf einer Prüfplatte befestigte Substrat gedrückt. Das Substrat soll dabei mit der Reinheit eingesetzt werden, mit der es in der realen Applikation üblicherweise verklebt wird. Der Probenkörper wird anschließend direkt in einem Zugprüfgerät der Firma Zwick abgezogen, und zwar mit einer Abzugsgeschwindigkeit von 300 mm/min. Dafür wird die Prüfplatte in einer Halteschiene eingespannt und der T-Block wird abgezogen. Der Abzugswinkel beträgt 90°.

Überträgt sich das Stanzteil direkt und sauber auf das Substrat, wird der Spendevorgang als erfolgreich bezeichnet. Wenn es auf dem Liner verbleibt, ein Abheben des T-Blocks verhindert oder nicht direkt übertragen wird, sich z.B. anlupft, d.h. nicht vollständig auf dem Substrat aufgebracht ist, sondern nur teilweise klebt, wodurch beispielsweise auch ein Umklappen des Stanzteils möglich ist, wird der Spendevorgang als nicht erfolgreich bewertet. Es werden vier Übertragungen durchgeführt. Die Ergebnisse werden gemittelt. Ist der Spendevorgang in allen Fällen erfolgreich, wird der Spendeerfolg mit 100% bewertet, andernfalls mit dem entsprechenden Bruchteil in Prozent.

Figur 4 zeigt eine vereinfachte Darstellung des Übertragungstests in den einzelnen Phasen. Das erste Bild von links zeigt einen Liner 3, der so um einen T-Block 5 geführt ist, dass das Stanzteil 2 mittig unter dem T-Block 5 liegt. Der überstehende Liner 3 ist mechanisch am vertikalen Teil des T-Blocks 5 befestigt. Das Substrat 6 liegt separat davon vor. Das zweite Bild von links zeigt, wie der T-Block 5 mit dem Liner 3 und dem darauf angeordneten Stanzteil 2 auf das Substrat 6 gedrückt wird. Das dritte Bild von links zeigt, wie der T-Block 5 vom Substrat 6 abgezogen wird. Im rechten Bild ist unten die Variante gezeigt, in der das Stanzteil 2 direkt und sauber auf das Substrat 6 übertragen worden ist, so dass der Spendevorgang als erfolgreich bezeichnet werden kann. Im rechten Bild oben ist die Variante gezeigt, in der das Stanzteil 2 auf dem Liner 3 geblieben ist, so dass der Spendevorgang nicht als erfolgreich bezeichnet werden kann.

*Oberflächenenergie*

Oberflächenenergien (Oberflächenspannungen) werden nach DIN ISO 8296 bestimmt. Hierfür lassen sich zum Beispiel Testtinten der Firma Softal einsetzen. Die Tinten sind im Bereich von 30 bis 72 mN/m erhältlich. Die Tinte wird bei 23 °C und 50% rel. Luftfeuchtigkeit mit einem Tintenstrich auf die Oberfläche aufgetragen. Zieht sich der Tintenstrich in weniger als 2 Sekunden zusammen, wird die Messung mit Tinte mit niedrigerer Oberflächenenergie wiederholt, bis die 2 Sekunden erreicht sind. Bleibt der Tintenanstrich länger als 2 Sekunden unverändert, wird die Messung mit Tinte mit höherer Oberflächenenergie wiederholt, bis die 2 Sekunden erreicht sind. Der auf der passenden Tintenflasche angegebene Wert entspricht dann dem der Oberflächenenergie des Substrats.

*Dicke*

Die Dicke einer Klebemasseschicht, eines Klebebands bzw. einer Trägerschicht oder eines Liners lässt sich über handelsübliche Dickenmessgeräte (Taster-Prüfgeräte) mit Genauigkeiten von weniger als 1 $\mu$m Abweichung ermitteln. In der vorliegenden Anmeldung wird das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen. Die Dicke einer Klebemasseschicht kann insbesondere durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners.

*Glasübergangstemperatur $T_g$, Schmelztemperatur, Erweichungstemperatur*

Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg. Auch die Schmelztemperatur bzw. Erweichungstemperatur von Polymeren bzw. Polymerblöcken wird auf diese Weise ermittelt.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*MMAP*

In ein trockenes Probenglas werden 5,0 g Testsubstanz (das zu untersuchende Klebharzmuster) eingewogen und mit 10 mL trockenem Anilin (CAS [62-53-3], ≥ 99,5%, Sigma-Aldrich #51788 oder vergleichbar) und 5 mL trockenem Methylcyclohexan (CAS [108-87-2], ≥ 99%, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

Es kamen folgende Klebebänder, Liner und Substrate zum Einsatz:

Klebebänder:

Tabelle 2: Klebebänder

| *Probe* | *Klebeband* | *Dicke [µm]* | *Handelsname* | *Hersteller* |
|---|---|---|---|---|
| *K1* | *viskoelastischer Acrylatschaum (wie vorstehend definiert)* | *1.100* | | |
| *K2* | *viskoelastischer Schaum auf SBC-Basis (wie vorstehend definiert)* | *1.100* | | |
| *K3* | *dreischichtiges Klebeband einer Dichte von etwa 592 kg/m$^3$, mit Acrylatschaumkern enthaltend Mikroballons, und beidseitig je einer Syntheseka utsch ukklebmasseschicht zu je ca. 50 µm auf Basis von SIS und Klebharz* | *1.100* | *3M Acrylic Plus EX4511* | *3M Deutschland GmbH* |

(fortgesetzt)

| Probe | Klebeband | Dicke [µm] | Handelsname | Hersteller |
|---|---|---|---|---|
| K4 | viskoelastischer Acrylatschaum einer Dichte von etwa 700 kg/$m^3$, hergestellt mittels UV-Polymerisation und enthaltend Hohlglaskugeln | 1.200 | 3M GT 6012 | 3M Deutschland GmbH |
| K5 | dreischichtiges Klebeband einer Dichte von 688 kg/$m^3$, mit Acrylatschaumkern enthaltend Hohlglaskugeln, und beidseitig je einer Acrylatklebmasseschicht zu je ca. 50 µm | 1.100 | 3M PX 5011 | 3M Deutschland GmbH |

Liner:

Tabelle 3: Liner

| Probe | Material | Quelle |
|---|---|---|
| L1 | 120 µm dicker unsilikonisierter Polyolefin-Liner mit HDPE-Kern und 2 LDPE-Außenschichten | tesa SE |
| L2 | beidseitig silikonisierter PET-Liner einer Dicke von 75 µm | tesa SE |
| L3 | beidseitig silikonisierte Polyethylenfolie | Liner des Produkts 3M EX4511 |
| L4 | unsilikonisierter Poylethylen-Liner | Liner des Produkts 3M GT 6012 |
| L5 | beidseitig silikonisierte Polyethylenfolie | Liner des Produkts 3M PX 5011 |

Als Substrate kamen Polypropylen (PP), Acrylnitril-Butadien-Styrol-Copolymer (ABS) sowie Acrylnitril-Butadien-Styrol-Copolymer (tesa ABS) zum Einsatz. Das Polypropylen-Substrat (PP) enthält 20 Gew.-% Talkum und weist eine Oberflächenenergie von 32 mN/m auf. Das Acrylnitril-Butadien-Styrol-Copolymer (ABS) enthält 20 Gew.-% Glasfasern und weist eine Oberflächenenergie von 40 mN/m auf. Das Acrylnitril-Butadien-Styrol-Copolymer (tesa ABS) enthält keine Füllstoffe und weist eine Oberflächenenergie von 36 mN/m auf.

Testreihe Substrat 1 - Polypropylen (PP)

In der ersten Testreihe wurden die Abzugskräfte in z-Richtung für die jeweiligen Klebebänder auf den verschiedenen Linern sowie auf PP ermittelt. Die Werte sind in Tabelle 4.1 wiedergegeben.

| | | Abzugskraft in z-Richtung [N/$cm^2$] für Liner/Substrat (PP) | | | | | |
|---|---|---|---|---|---|---|---|
| | | Liner L3 | Liner L4 | Liner L2 | Liner L1 | Liner L5 | PP |
| Klebeband | K1 | 0,5 | 8,8 | 0,6 | 7,9 | 1,0 | 29,0 |
| | K2 | 0,6 | 18,1 | 1,6 | 16,3 | 1,5 | 76,0 |
| | K3 | 0,7 | 16,0 | 2,8 | 23,0 | 3,2 | 68,0 |
| | K4 | 1,5 | 3,4 | 1,6 | 4,5 | 2,5 | 15,9 |
| | K5 | 1,3 | 17,4 | 2,1 | 13,1 | 2,8 | 60,8 |

Tabelle 4.1: Abzugskräfte in z-Richtung PP

Aus den Werten der Tabelle 4.1 wurden die Abzugskraftverhältnisse der verschiedenen Liner zu PP ermittelt. Diese Verhältnisse sind in Tabelle 4.2 wiedergegeben.

| | | Abzugskraftverhältnis in z-Richtung für Liner/Substrat (PP) | | | | | |
|---|---|---|---|---|---|---|---|
| | | Liner L3 | Liner L4 | Liner L2 | Liner L1 | Liner L5 | PP |
| Klebemasse | K1 | 0,02 | 0,30 | 0,02 | 0,27 | 0,04 | 1,00 |
| | K2 | 0,01 | 0,24 | 0,02 | 0,21 | 0,02 | 1,00 |
| | K3 | 0,01 | 0,24 | 0,04 | 0,34 | 0,05 | 1,00 |
| | K4 | 0,09 | 0,22 | 0,10 | 0,28 | 0,15 | 1,00 |
| | K5 | 0,02 | 0,29 | 0,03 | 0,21 | 0,05 | 1,00 |

Tabelle 4.2: Abzugskraftverhältnisse in z-Richtung Liner/PP

Gemäß Übertragungstest wurde der Spendeerfolg auf PP ermittelt. Die Ergebnisse sind in Tabelle 4.3 wiedergegeben:

| | | Spendeerfolg vom Liner auf PP | | | | |
|---|---|---|---|---|---|---|
| | | Liner L3 | Liner L4 | Liner L2 | Liner L1 | Liner L5 |
| Klebemasse | K1 | 100% | 0% | 100% | 0% | 100% |
| | K2 | 100% | 0% | 100% | 0% | 100% |
| | K3 | 100% | 0% | 100% | 0% | 100% |
| | K4 | 100% | 0% | 100% | 0% | 75% |
| | K5 | 100% | 0% | 100% | 0% | 100% |

Tabelle 4.3: Spendeerfolg Liner auf PP

Testreihe Substrat 2 - Acrylnitril-Butadien-Styrol-Copolymer (ABS)

In der zweiten Testreihe wurden die Abzugskräfte in z-Richtung für die jeweiligen Klebebänder auf den verschiedenen Linern sowie auf ABS ermittelt. Die Werte sind in Tabelle 5.1 wiedergegeben.

| | | Abzugskraft in z-Richtung [N/cm$^2$] für Liner/Substrat | | | | | |
|---|---|---|---|---|---|---|---|
| | | Liner L3 | Liner L4 | Liner L2 | Liner L1 | Liner L5 | ABS |
| Klebmasse | K1 | 0,5 | 8,8 | 0,6 | 7,9 | 1,0 | 61,4 |
| | K2 | 0,6 | 18,1 | 1,6 | 16,3 | 1,5 | 67,0 |
| | K3 | 0,7 | 16,0 | 2,8 | 23,0 | 3,2 | 59,5 |
| | K4 | 1,5 | 3,4 | 1,6 | 4,5 | 2,5 | 34,0 |
| | K5 | 1,3 | 17,4 | 2,1 | 13,1 | 2,8 | 46,2 |

Tabelle 5.1: Abzugskräfte in z-Richtung ABS

Aus den Werten der Tabelle 5.1 wurden die Abzugskraftverhältnisse der verschiedenen Liner zu ABS ermittelt. Diese Verhältnisse sind in Tabelle 5.2 wiedergegeben.

| | | Abzugskraftverhältnis in z-Richtung für Liner/Substrat | | | | | |
|---|---|---|---|---|---|---|---|
| | | Liner L3 | Liner L4 | Liner L2 | Liner L1 | Liner L5 | ABS |
| Klebemasse | K1 | 0,01 | 0,14 | 0,01 | 0,13 | 0,02 | 1,00 |
| | K2 | 0,01 | 0,27 | 0,02 | 0,24 | 0,02 | 1,00 |
| | K3 | 0,01 | 0,27 | 0,05 | 0,39 | 0,05 | 1,00 |
| | K4 | 0,04 | 0,10 | 0,05 | 0,13 | 0,07 | 1,00 |
| | K5 | 0,03 | 0,38 | 0,05 | 0,28 | 0,06 | 1,00 |

Tabelle 5.2: Abzugskraftverhältnisse in z-Richtung Liner/ABS

Gemäß Übertragungstest wird der Spendeerfolg auf ABS ermittelt. Die Ergebnisse sind in Tabelle 5.3 wiedergegeben:

| | | Spendeerfolg vom Liner auf ABS | | | | |
|---|---|---|---|---|---|---|
| | | Liner L3 | Liner L4 | Liner L2 | Liner L1 | Liner L5 |
| Klebemasse | K1 | 100% | 75% | 100% | 75% | 100% |
| | K2 | 100% | 0% | 100% | 0% | 100% |
| | K3 | 100% | 0% | 100% | 0% | 100% |
| | K4 | 100% | 100% | 100% | 75% | 100% |
| | K5 | 100% | 0% | 100% | 0% | 100% |

Tabelle 5.3: Spendeerfolg Liner auf ABS

Testreihe Substrat 3 - Acrylnitril-Butadien-Styrol-Copolymer (tesa ABS)

In der dritten Testreihe wurden die Abzugskräfte in z-Richtung für die jeweiligen Klebebänder auf den verschiedenen Linern sowie auf tesa ABS ermittelt. Die Werte sind in Tabelle 6.1 wiedergegeben.

| | | Abzugskraft in z-Richtung [N/cm$^2$] für Liner/Substrat | | | | | |
|---|---|---|---|---|---|---|---|
| | | Liner L3 | Liner L4 | Liner L2 | Liner L1 | Liner L5 | tesa ABS |
| Klebmasse | K1 | 0,5 | 8,8 | 0,6 | 7,9 | 1,0 | 86,3 |
| | K2 | 0,6 | 18,1 | 1,6 | 16,3 | 1,5 | 90,9 |
| | K3 | 0,7 | 16,0 | 2,8 | 23,0 | 3,2 | 41,0 |
| | K4 | 1,5 | 3,4 | 1,6 | 4,5 | 2,5 | 74,3 |
| | K5 | 1,3 | 17,4 | 2,1 | 13,1 | 2,8 | 64,1 |

Tabelle 6.1: Abzugskräfte in z-Richtung tesa ABS

Aus den Werten der Tabelle 6.1 wurden die Abzugskraftverhältnisse der verschiedenen Liner zu tesa ABS ermittelt. Diese Verhältnisse sind in Tabelle 6.2 wiedergegeben.

| | | Abzugskraftverhältnis in z-Richtung für Liner/Substrat | | | | | |
|---|---|---|---|---|---|---|---|
| | | Liner L3 | Liner L4 | Liner L2 | Liner L1 | Liner L5 | tesa ABS |
| Klebemasse | K1 | 0,01 | 0,10 | 0,01 | 0,09 | 0,01 | 1,00 |
| | K2 | 0,01 | 0,20 | 0,02 | 0,18 | 0,02 | 1,00 |
| | K3 | 0,02 | 0,39 | 0,07 | 0,56 | 0,08 | 1,00 |
| | K4 | 0,02 | 0,05 | 0,02 | 0,06 | 0,03 | 1,00 |
| | K5 | 0,02 | 0,27 | 0,03 | 0,20 | 0,04 | 1,00 |

Tabelle 6.2: Abzugskraftverhältnisse in z-Richtung Liner/tesaABS

Gemäß Übertragungstest wurde der Spendeerfolg auf tesa ABS ermittelt. Die Ergebnisse sind in Tabelle 6.3 wiedergegeben:

| | | Spendeerfolg vom Liner auf tesa ABS | | | | |
|---|---|---|---|---|---|---|
| | | Liner L3 | Liner L4 | Liner L2 | Liner L1 | Liner L5 |
| Klebemasse | K1 | 100% | 100% | 100% | 100% | 100% |
| | K2 | 100% | 0% | 100% | 75% | 100% |
| | K3 | 100% | 0% | 100% | 0% | 100% |
| | K4 | 100% | 100% | 100% | 100% | 100% |
| | K5 | 100% | 0% | 100% | 0% | 100% |

Tabelle 6.3: Spendeerfolg Liner auf tesa ABS

Eine Betrachtung der Messwerte für die Abzugswerte (Tabellen 4.1, 5.1 und 6.1) lässt keinen Trend erkennen. Die Daten zeigen, dass das jeweils gleiche Klebeband auf unterschiedlichen Linern unterschiedliche Abzugskräfte in z-Richtung zeigt. Des Weiteren kann festgestellt werden, dass die Klebebänder auf jeweils dem gleichen Liner ebenfalls unterschiedliche Abzugskräfte in z-Richtung zeigen. Eine Vorhersage zum Spendeerfolg kann anhand dieser Daten nicht getroffen werden.

Im Folgenden wurde das Verhältnis der Abzugskraft in z-Richtung vom Liner zur Abzugskraft in z-Richtung vom Substrat gebildet (Tabellen 4.2, 5.2 und 6.2). Es zeigt sich, dass, obwohl die einzelnen Klebebänder unterschiedliche initiale Haftung auf dem Substrat und dem Liner aufweisen, Trends auftreten. So zeigen die verschiedenen Klebebänder im Abzugskraftverhältnis zum Substrat Werte in einer vergleichbaren Größenordnung.

Ein Vergleich der Daten für das Abzugskraftverhältnis mit denjenigen für den Spendeerfolg (Tabellen 4.3, 5.3 und 6.3) zeigt, dass ein ausreichender Spendeerfolg (zumindest zu 75% oder aber zu 100%) dann eintritt, wenn das Abzugskraftverhältnis einen bestimmten Wert unterschreitet, nämlich höchstens 0,18 beträgt.

Überraschenderweise ergibt sich, dass der Spendeerfolg mit Hilfe der Abzugskraftverhältnisse des Klebebands vom Liner zum Substrat vorhergesagt werden kann. Berücksichtigt man dies bei der Auswahl von Klebeband und Liner im Hinblick auf die Haftung auf dem Substrat, kann somit ein stabiler Applikationsprozess gewährleistet werden.

**Patentansprüche**

1. Verfahren zum Übertragen von Stanzteilen von einer Linerschicht auf eine Oberfläche, wobei die Stanzteile von der Linerschicht mittels eines Applikators auf die Oberfläche übertragen werden, **dadurch gekennzeichnet, dass** das Verhältnis der Abzugskraft des Stanzteils von der Linerschicht in z-Richtung zur Abzugskraft des Stanzteils von der Oberfläche in z-Richtung höchstens 0,18 beträgt.

**2.** Verfahren nach Anspruch 1, **dadurch gekennzeichnet, dass** der Applikator

(i) einen Stempel mit einem Stempelkopf,
(ii) eine Stanzteilrolle, die ein Stanzteilband beinhaltet, das aus den auf der Linerschicht aufgebrachten Stanzteilen gebildet ist, die mindestens eine (Haft-)Klebmasseschicht umfassen, sowie
(iii) eine Liner-Aufwickelrolle umfasst,

wobei in dem Verfahren das Stanzteilband über den Stempelkopf des Stempels läuft, wobei das Stanzteilband gestoppt wird, wenn eines der Stanzteile über dem Stempelkopf positioniert ist und der Stempel dann in einer Auf- und-ab-Bewegung das Stanzteil auf die Oberfläche klebt.

**3.** Verfahren nach Anspruch 1 oder Anspruch 2, **dadurch gekennzeichnet, dass** das Verhältnis von Abzugskraft des Stanzteils von der Linerschicht in z-Richtung zu Abzugskraft des Stanzteils von der Oberfläche in z-Richtung höchstens 0,15, vorzugsweise höchstens 0,12 und insbesondere höchstens 0,10 beträgt.

**4.** Verfahren nach einem der Ansprüche 1 bis 3, **dadurch gekennzeichnet, dass** eine Steuerung, die mit einem ersten Sensor, der mit einem Abtastbereich auf den Stempelkopf gerichtet ist und das Vorhandensein eines der Stanzteile am Stempelkopf registriert, und einem Roboterarm, an dem der Applikator angeordnet ist, signalleitend verbunden ist, die Aufwickelrolle bei Registrierung eines der Stanzteile am Stempelkopf stoppt und dann eine Ab-Bewegung des Roboterarms mit dem Applikator zum Aufkleben des Stanzteiles auf der Oberfläche und eine anschließende Auf-Bewegung des Roboterarms mit dem Applikator zur Rückkehr in die Ausgangsposition antreibt.

**5.** Verfahren nach Anspruch 4, **dadurch gekennzeichnet, dass** nach Aufkleben des Stanzteiles auf die Oberfläche das Stanzteilband um ein Stanzteil weitergetaktet wird.

**6.** Verfahren nach Anspruch 5, **dadurch gekennzeichnet, dass** die Steuerung den Roboterarm ansteuert und den Stempelkopf in eine erste Position über der Oberfläche bewegt und das Stanzteil in einer ersten Oberflächenposition aufklebt und nach dem Aufkleben des Stanzteils den Roboterarm ansteuert und den Stempelkopf während der Weitertaktung des Stanzteilbandes in eine zweite Position über der Oberfläche bewegt und dort eine Ab-Bewegung und eine anschließende Auf-Bewegung des Roboterarms mit dem Applikator antreibt.

**7.** Verfahren nach einem der Ansprüche 1 bis 6, **dadurch gekennzeichnet, dass** der Stempelkopf federnd gelagert und dem Stempelkopf mindestens ein Drucksensor zugeordnet ist, der die Andruckkraft des Stanzteils auf der Oberfläche detektiert.

**8.** Verfahren nach einem der Ansprüche 1 bis 7, **dadurch gekennzeichnet, dass** die mindestens eine Klebmasseschicht aus einer selbstklebenden Masse besteht, die auf Vinylaromatenblockcopolymer basiert und Klebharz enthält, wobei das Vinylaromatenblockcopolymer typischerweise

- mindestens einen Polymerblock A enthält, der überwiegend durch Polymerisation von Vinylaromaten gebildet ist, und
- gleichzeitig mindestens einen Polymerblock B enthält, der überwiegend durch Polymerisation von konjugierten Dienen gebildet ist, wobei der Anteil an 1,2-verknüpften konjugiertem Dien im B-Block weniger als 30 Gew.-% beträgt, vorzugsweise weniger als 20 Gew.-%.

**9.** Verfahren nach einem der Ansprüche 1 bis 7, **dadurch gekennzeichnet, dass** die mindestens eine Klebmasseschicht Poly(meth)acrylat sowie gegebenenfalls Synthesekautschuk und/oder mindestens ein mit dem/den Poly(meth)acrylat(en) verträgliches Klebharz enthält.

**10.** Verfahren nach einem der Ansprüche 1 bis 9, **dadurch gekennzeichnet, dass** die Klebmasseschicht vernetzt ist, beispielsweise durch Bestrahlung mittels UV oder Elektronen, oder mittels thermischem Vernetzer.

**11.** Verfahren nach einem der Ansprüche 1 bis 10, **dadurch gekennzeichnet, dass** die Klebmasseschicht geschäumt ist, vorzugsweise mit Mikroballons.

**12.** Verfahren nach einem der Ansprüche 1 bis 11, **dadurch gekennzeichnet, dass** das Klebeband, aus dem die Stanzteile gebildet sind, ein Klebeband mit einem acrylatbasierten viskoelastischen Schaum ist, auf den gegebenenfalls mindestens einseitig, vorzugsweise beidseitig, eine (Haft-)Klebemasseschicht aufgebracht ist.

**13.** Verfahren nach einem der Ansprüche 1 bis 12, **dadurch gekennzeichnet, dass** die Klebmasseschicht eine Dicke von 25 bis 5000 µm, vorzugsweise von 50 bis 3000 µm, bevorzugter 100 bis 2000 µm, noch bevorzugter von 400 bis 1500 µm, wie insbesondere 1000 bis 1200 µm aufweist.

**14.** Verfahren nach einem der Ansprüche 1 bis 13, **dadurch gekennzeichnet, dass** das Stanzteilband ein doppelseitiges Klebeband ist.

**15.** Verwendung des Verfahrens nach einem der Ansprüche 1 bis 14 zur Verklebung von Oberflächen mit einer Oberflächenenergie von 50 mN/m oder weniger, vorzugsweise weniger als 40 mN/m, und insbesondere weniger als 35 mN/m.

**16.** Verwendung des Verfahrens nach einem der Ansprüche 1 bis 14 zur Verklebung von Kunststoffteilen, insbesondere in der Automobilindustrie.

**17.** Verwendung des Verfahrens nach einem der Ansprüche 1 bis 14 zur Verringerung der Fehlerhäufigkeit bei der Verklebung von Kunststoffteilen, insbesondere in der Automobilindustrie.

**18.** Verwendung nach einem der Ansprüche 15 bis 17, **dadurch gekennzeichnet, dass** das Verfahren zum Aufbringen von Stanzteilen automatisiert erfolgt.

**19.** Testverfahren zur Auswahl eines Klebebandes als Stanzteilband, wobei das Stanzteilband aus auf einer Linerschicht aufgebrachten Stanzteilen gebildet ist, die mindestens eine Klebmasseschicht umfassen, für ein Verfahren zum Übertragen der Stanzteile von der Linerschicht auf eine Oberfläche eines Substrats mittels eines Applikators, insbesondere nach einem der Ansprüche 1 bis 14, umfassend die folgenden Schritte:

a) Aufbringen eines Stanzteils auf einem Stück Liner und Andrücken des Stanzteils auf dem Liner;
b) Führen des Liners um einen T-Block derart, dass das Stanzteil mittig auf dem T-Block liegt und mechanisches Befestigen des überstehenden Liners am vertikalen Teil des T-Blocks;
c) kontrolliertes Andrücken des T-Blocks mit dem Liner und dem auf diesem befindlichen Stanzteil mit definierter Kraft und für eine definierte Zeit auf eine Probe des Substrats;
d) Ermitteln des Erfolgs der Übertragung des Stanzteils vom Liner auf das Substrat.

**20.** Testverfahren nach Anspruch 19, **dadurch gekennzeichnet, dass** der Erfolg der Übertragung klassifiziert wird in

- erfolgreich, wenn das Stanzteil direkt und sauber auf das Substrat übertragen worden ist; oder
- nicht erfolgreich, wenn das Stanzteil nicht direkt übertragen wird, insbesondere auf dem Liner verbleibt oder ein Abheben des T-Blocks verhindert.

**21.** Testverfahren nach Anspruch 19 oder 20, **dadurch gekennzeichnet, dass** zur Vorhersage des Erfolgs der Übertragung das Abzugskraftverhältnis der Abzugskraft in z-Richtung vom Liner zur Abzugskraft in z-Richtung vom Substrat durch folgende Schritte ermittelt wird:

i) mechanisches Befestigen eines Probenstücks des Substrats von definierter Größe auf einer Prüfplatte;
ii) Andrücken eines Probenstücks des zu prüfenden Klebebandes von definierter Größe auf das Probenstück des Substrats mittels eines T-Blocks mit definierter Andruckkraft und definierter Andruckzeit;
iii) Messen der Abzugskraft des Klebebandes vom Substrat in z-Richtung in einem Zugprüfgerät.
iv) mechanisches Befestigen eines Probenstücks des Liners von definierter Größe auf einer Prüfplatte;
v) Andrücken eines Probenstücks des zu prüfenden Klebebandes von definierter Größe auf das Probenstück des Liners mittels eines T-Blocks mit definierter Andruckkraft und definierter Andruckzeit;
vi) Messen der Abzugskraft des Klebebandes vom Liner in z-Richtung in einem Zugprüfgerät
vii) Bilden des Quotienten aus Abzugskraft des Klebebandes vom Liner in z-Richtung und Abzugskraft des Klebebandes vom Substrat in z-Richtung.

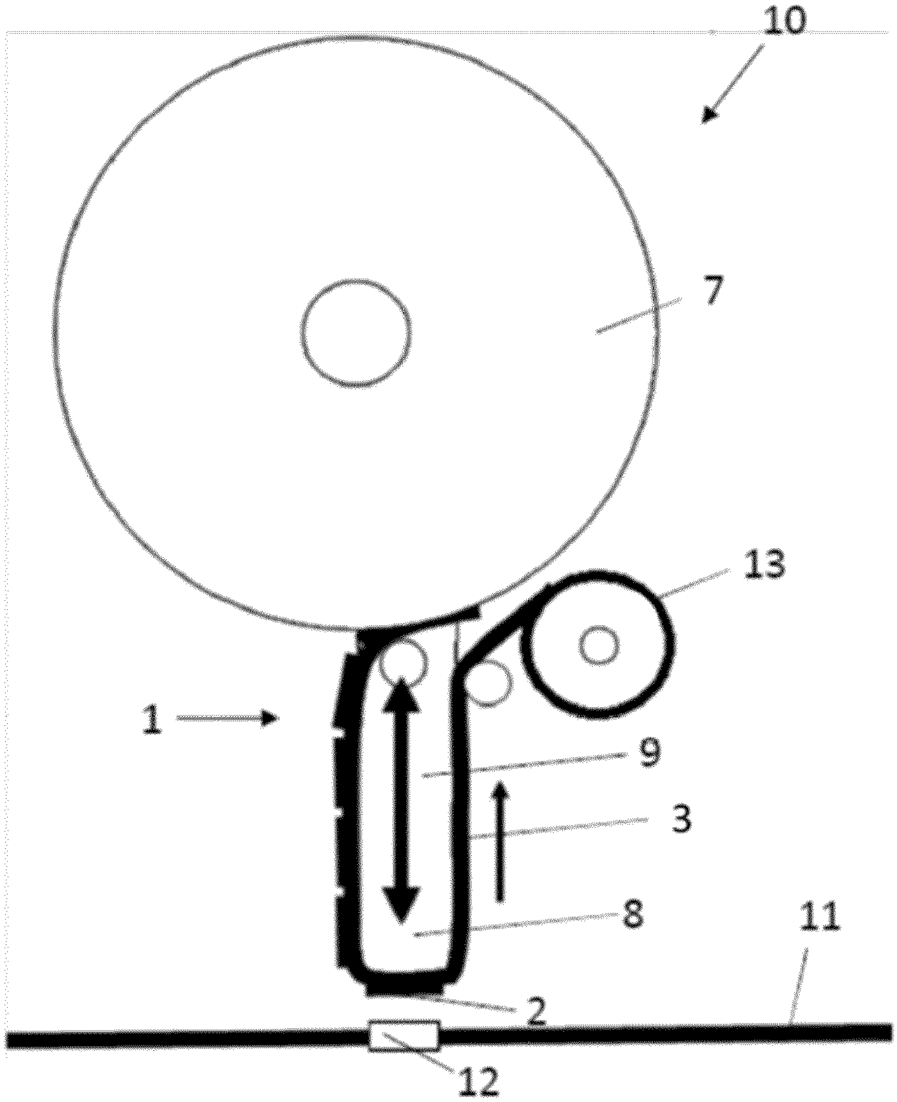


Fig. 1

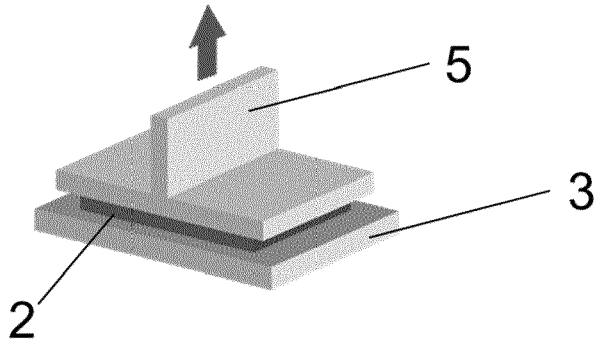


Fig. 2

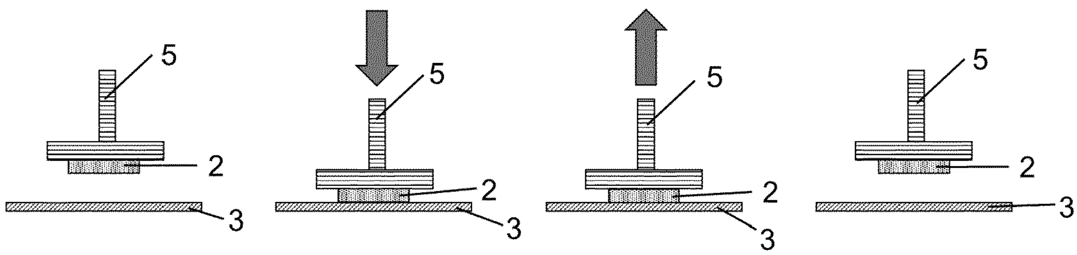


Fig. 3

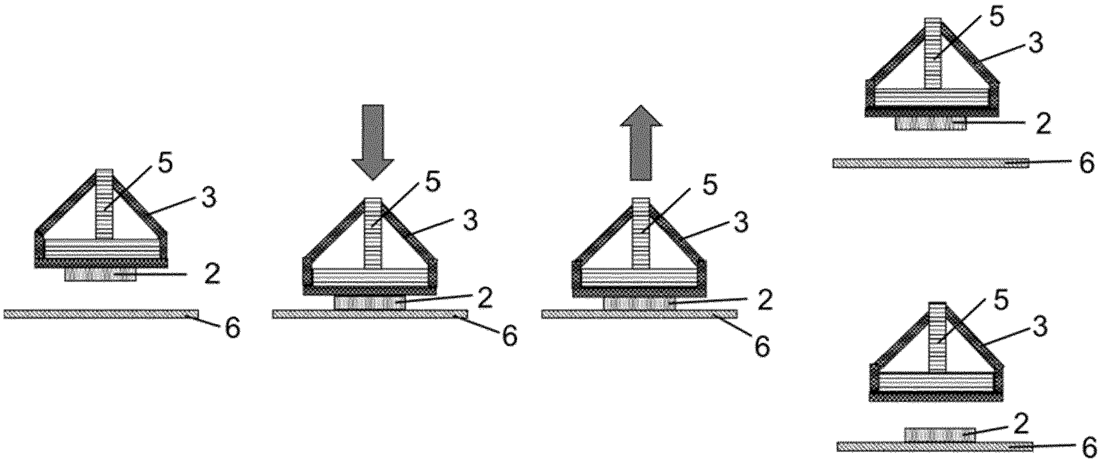


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10035236 A1
- US 20050016671 A1
- DE 102018200439
- DE 102018210746
- EP 2832779 A1
- DE 69214438 T2
- US 7491434 B2
- DE 102013215297 A1
- EP 1978069 A1


### In der Beschreibung aufgeführte Nicht-Patentliteratur


- **D. SATAS.** Handbook of Pressure Sensitive Adhesives. 1989, 172
- **DONATAS SATAS.** Handbook of Pressure Sensitive Adhesive Technology. van Nostrand, 1989
- **P. E. HINKAMP.** *Polymer,* 1967, vol. 8, 381
- **C. DONKER.** *PSTC Annual Technical Seminar, Proceedings,* Mai 2001, 149-164
- *CHEMICAL ABSTRACTS,* 1330-20-7
- *CHEMICAL ABSTRACTS,* 123-42-2
- *CHEMICAL ABSTRACTS,* 62-53-3
- *CHEMICAL ABSTRACTS,* 108-87-2